# EUROPEAN PATENT APPLICATION

(11) **EP 4 373 194 A1**
(43) Date of publication of application: **22.05.2024**
(21) Application number: 23786461.6
(22) Date of filing: 26.09.2023
(51) Int. Cl.: H04W 72/12, H04W 8/00, H04W 48/16, H04W 72/04, H04W 84/12, H04W 84/20, H04W 88/06

(54) **ELECTRONIC DEVICE FOR SCHEDULING DATA LINK, AND OPERATING METHOD THEREFOR**

(30) Priority: 29.09.2022 KR 20220124477; 27.10.2022 KR 20220140540
(71) Applicant: Samsung Electronics Co., Ltd., Suwon-si, Gyeonggi-do 16677 (KR)
(72) Inventor: JUNG, Buseop, Suwon-si Gyeonggi-do 16677 (KR); KIM, Junsung, Suwon-si Gyeonggi-do 16677 (KR); LEE, Soonho, Suwon-si Gyeonggi-do 16677 (KR); LEE, Sunkee, Suwon-si Gyeonggi-do 16677 (KR)
(74) Representative: HGF
(86) International application number: PCT/KR2023/014881
(87) International publication number: WO 2024/072025

(57) **Abstract**

Various embodiments of the disclosure relate to an apparatus and a method for scheduling a data communication link of an electronic device. The electronic device includes a communication circuit and a processor, and the processor is configured to perform scheduling for different time sections, based on a request for configuring an NDP scheduling with an external electronic device included in a cluster of NAN, transmit or receive data to or from the external electronic device, based on a first scheduling information corresponding to a first time section generated through the scheduling, identify channels of the electronic device and the external electronic device allocated to a second time section different from the first time section, and in case that the electronic device and the external electronic device use an equal channel in the second time section, transmit or receive data to or from the external electronic device, based on the first scheduling information and a second scheduling information corresponding to the second time section generated through the scheduling. Other embodiments are possible.

## Description

### [Technical Field]

Various embodiments of the disclosure relate to an electronic device for scheduling a data link and a method of operating the same.

### [Background Art]

Due to the development of information communication technology and semiconductor technology, various electronic devices are widely used. Some of these electronic device may provide various types of proximity services using low-power discovery technology. A proximity service may be a communication function by which adjacent electronic devices can rapidly exchange data through a proximity network. For example, a proximity service may include a low-power proximity communication service using a Bluetooth Low Energy (BLE) beacon or a low-power proximity communication service based on low-power short-range communication technology (for example, neighbor awareness networking (NAN) and/or Wi-Fi Aware) (hereinafter, referred to as `NAN') based on a wireless local area network (WLAN).

The low-power proximity service based on NAN may include a communication function of configuring a proximity network dynamically depending on movement of the electronic device to exchange data and may include clusters of electronic devices. Electronic devices included in a cluster may advertise of the existence of the cluster within a particular time duration (or communication direction) (for example, a discovery window (DW)) or transmit and/or receive a signal (for example, a beacon) and/or a service discovery frame (SDF) for discovery to perform synchronization. For example, the cluster may indicate a set of electronic devices included in the proximity network.

### [Disclosure of Invention]

### [Technical Problem]

Electronic devices within a cluster may configure (or generate) a NAN data path (NDP) to perform NAN communication in a section (e.g. time or frequency resources) other than a discovery window (DW). For example, the electronic device included within the cluster may configure a time slot(s) (for example, further available windows (FAWs)) for data transmission in a section between discovery windows through scheduling with an external electronic device. The electronic device may then transmit and/or receive data to and/or from an external electronic device through the time slot configured between discovery windows.

The electronic device may simultaneously support a plurality of NAN data paths. For example, the electronic device may simultaneously transmit and/or receive data to and/or from a plurality of external electronic devices within the cluster.

The electronic device may configure an NDP based on a first frequency band (for example, a band of about 6 GHz) through scheduling with a first external electronic device. The electronic device may determine the first frequency band as an effective frequency band (or an effective channel) based on the NDP configuration with the first external electronic device.

The electronic device may configure an NDP with a second external electronic device based on detection of the second external electronic device for data transmission during data transmission to the first external electronic device through the NDP. When the second external electronic device does not support the first frequency band, the electronic device may update the NDP (or NDP scheduling) with the first external electronic device to a second frequency band (for example, about 5 GHz) and configure the NDP based on the second frequency band with the external electronic device through scheduling. For example, if the electronic device cannot simultaneously use the first frequency band and the second frequency band due to the structure of a communication circuit, the electronic device may update the NDP (or NDP scheduling) with the first external electronic device to the second frequency band (for example, about 5 GHz). However, the NDP configuration with the second external electronic device may be delayed due to waiting for based on the update/new configuration of the NDP (or NDP scheduling) with the first external electronic device to be completed.

Various embodiments of the disclosure disclose an apparatus and a method for NDP scheduling by an electronic device that aim to reduce delays caused by updating of NDP(s).

The technical subjects pursued in the disclosure are not limited to the above mentioned technical subjects, and other technical subjects which are not mentioned may be clearly understood through the following descriptions by those skilled in the art of the disclosure.

### [Solution to Problem]

According to various embodiments, an electronic device may include a communication circuit and a processor operatively connected to the communication circuit. According to an embodiment, the processor may perform schedulings for different time sections, based on a request for configuring NAN data path (NDP) scheduling with an external electronic device included in a cluster of neighbor awareness networking (NAN). According to an embodiment, the processor may transmit or receive data to or from the external electronic device, based on first scheduling information corresponding to a first time section generated through the scheduling. According to an embodiment, the processor may identify channels of the electronic device and the external electronic device allocated in a second time section different from the first time section. According to an embodiment, in case that the electronic device and the external electronic device use the same channel in the second time section, the processor may transmit or receive data to or from the external electronic device, based on the first scheduling information and second scheduling information corresponding to the second time section generated through the scheduling.

According to various embodiments, an electronic device may include a communication circuit and a processor operatively connected to the communication circuit. According to an embodiment, the processor may perform schedulings for different frequency bands, based on a request for configuring NAN data path (NDP) scheduling with a first external electronic device included in a cluster of neighbor awareness networking (NAN). According to an embodiment, the processor may perform data communication with the first external electronic device, based on first scheduling information corresponding to a first frequency band generated through the scheduling. According to an embodiment, in case that a second external electronic device is detected during the data communication with the first external electronic device, the processor may identify whether the second external electronic devices supports the first frequency band. According to an embodiment, when the second eternal electronic device does not support the first frequency band, the processor may change the scheduling information for the data communication with the first external electronic device to second scheduling information corresponding to a second frequency band generated through the scheduling. According to an embodiment, the processor may perform scheduling for the second frequency band with the second external electronic device.

According to various embodiments, the method of operating the electronic device may include performing schedulings for different time sections, based on a request for configuring NAN data path (NDP) scheduling with an external electronic device included in a cluster of neighbor awareness networking (NAN). According to an embodiment, the method of operating the electronic device may include transmitting or receiving data to or from the external electronic device, based on a first scheduling information corresponding to a first time section generated through the scheduling. According to an embodiment, the method of operating the electronic device may include identifying channels of the electronic device and the external electronic device allocated to a second time section different from the first time section. According to an embodiment, the method of operating the electronic device may include, in case that the electronic device and the external electronic device use an equal channel in the second time section, transmitting or receiving data to or from the external electronic device, based on the first scheduling information and a second scheduling information corresponding to the second time section generated through the scheduling.

According to various embodiments, a non-transitory computer-readable medium (or computer program product) storing one or more programs is described. According to an embodiment, the one or more programs include instructions to, when executed by a processor of an electronic device, perform schedulings for different time sections, based on a request for configuring a NAN data path (NDP) scheduling with an external electronic device included in a cluster of neighbor awareness networking (NAN), transmit or receive data to or from the external electronic device, based on a first scheduling information corresponding to a first time section generated through the scheduling, identify channels of the electronic device and the external electronic device allocated to a second time section different from the first time section, and in case that the electronic device and the external electronic device use an equal channel in the second time section, transmit or receive data to or from the external electronic device, based on the first scheduling information and a second scheduling information corresponding to the second time section generated through the scheduling.

### [Advantageous Effects of Invention]

According to the present disclosure, the electronic device can reduce a time delay due to a scheduling update with the external electronic device by updating an NDP with the external electronic device without additional scheduling via the use of a plurality of schedulings based on different frequency bands or a plurality of schedulings based on different time sections with the external electronic device that are performed when an NDP is initially being configured.

Effects which can be obtained from various embodiments of the disclosure are not limited to the above-mentioned effects, and other effects which have not been mentioned may be clearly understood by those skilled in the art to which various embodiments of the disclosure belong based on the following description.

### [Brief Description of Drawings]

FIG. 1 is a block diagram illustrating an electronic device within a network environment.
FIG. 2 illustrates a NAN cluster.
FIG. 3 illustrates a protocol for transmitting a signal of an electronic device included in the NAN cluster.
FIG. 4 illustrates an example of data transmission and reception within the NAN cluster.
FIG. 5 is a block diagram of an electronic device for NDP scheduling.
FIG. 6 is a flowchart illustrating a process in which the electronic device performs scheduling based on time resources.
FIG. 7 is a flowchart illustrating a process in which the electronic device uses second scheduling information among first and second scheduling information.
FIG. 8A illustrates an example of time resources for first and second scheduling information by the electronic device.
FIG. 8B illustrates an example in which the electronic device uses first scheduling information.
FIG. 9 illustrates an example in which the electronic device performs a scheduling based on time resources.
FIG. 10 illustrates an example for scheduling by the electronic device.
FIG. 11 is a flowchart illustrating a process in which the electronic device performs scheduling based on frequency resources.
FIG. 12 illustrates an example in which the electronic device switches scheduling.
FIG. 13 illustrates an example in which the electronic device performs scheduling based on frequency resources.

### [Mode for the Invention]

Hereinafter, various examples are described in detail with reference to the accompanying drawings.

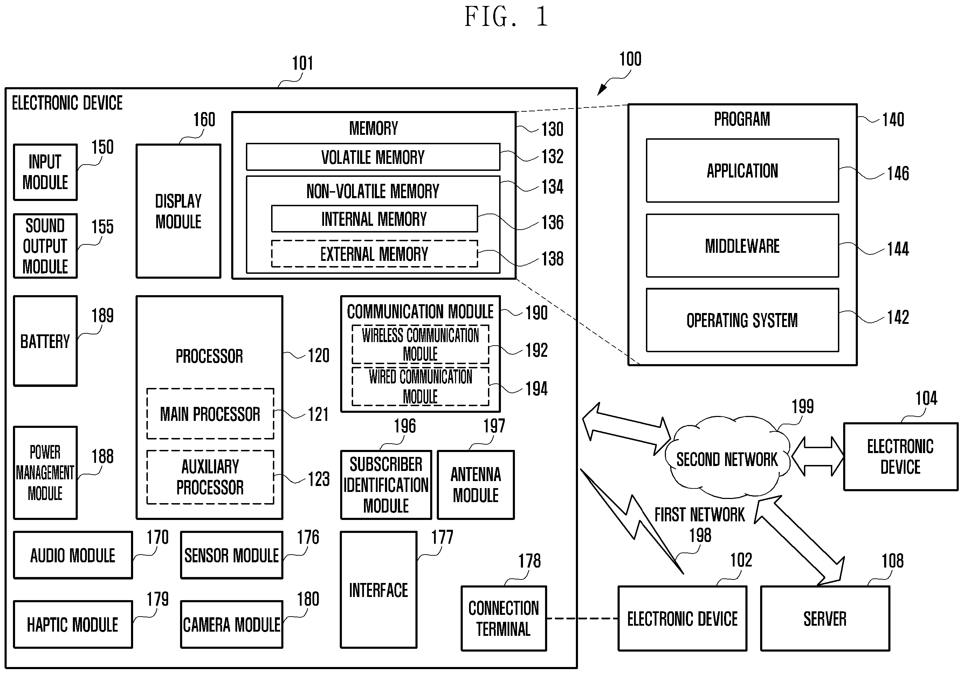

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

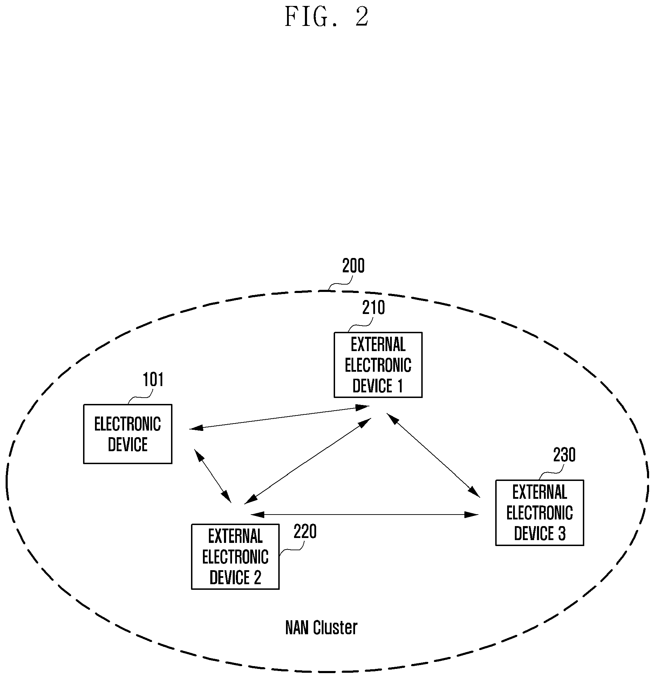

FIG. 2 illustrates a neighbor awareness network (NAN) cluster according to various examples. FIG. 2 illustrates an example of the configuration of a neighbor awareness network (NAN) cluster 200 for a proximity network. The cluster 200 may be a set of electronic devices 101, 210, 220, and/or 230 which configure the proximity network to mutually transmit and/or receive data to and/or from the respective electronic devices (or NAN devices) 101, 210, 220, and/or 230. For example, the cluster 200 may be referred to as a NAN cluster according to the NAN standard.

The electronic devices 101, 210, 220, or 230 included in the cluster 200 may transmit and/or receive a beacon (or a discovery beacon), a service discovery frame (SDF), and/or a NAN action frame (NAF) within a synchronized time duration (or communication duration) (for example, a discovery (or search or detection) window (DW)).

The electronic devices 101, 210, 220, and/or 230 within the cluster 200 may have synchronized time clocks. For example, the electronic devices 101, 210, 220, and/or 230 may be synchronized with the time clock of one of the electronic devices (for example, the electronic device 101) and transmit and/or receive beacons, SDFs, and/or NAFs in the same discovery window (DW).

The electronic device 101 supporting a NAN-based low-energy short-range wireless communication technology may broadcast a discovery signal (for example, a beacon) for discovering external electronic devices 210, 220, and/or 230 in a preset first period (for example, about 100 msec) and perform scanning in a preset second period (for example, about 10 msec) to receive discovery signals broadcasted from the external electronic devices 210, 220, and/or 230. The preset first and second periods may be repeated at a particular frequency/time interval.

The electronic device 101 may detect at least one external electronic device 210, 220, and/or 230 located around the electronic device 101 based on the search signals received through scanning and perform NAN cluster synchronization with the at least one detected external electronic devices 210, 220, and/or 230. The NAN cluster synchronization may include an operation of receiving time clock information of the electronic device (for example, the electronic device 101) which represents the NAN cluster to allow the electronic devices 101, 210, 220, and/or 230 included in the NAN cluster to transmit and/or receive data during the same channel and/or the same time.

Each of the plurality of electronic devices 101, 210, 220, and/or 230 may transmit a beacon and receive a beacon from other electronic devices 101, 210, 220, and/or 230, so as to configure one cluster 200 operating according to the synchronized time clock and the electronic devices 101, 210, 220, and/or 230 within the cluster 200 may perform NAN cluster synchronization (for example, time and/or channel synchronization).

The NAN cluster synchronization may be performed based on time and a channel of the electronic device (for example, the electronic device 101) having the highest master preference within the cluster 200. For example, the electronic devices electronic devices 101, 210, 220, and/or 230 within the cluster 200 configured through discovery may exchange signals related to master preference information indicating preference of operation as an anchor master and determine the electronic device (for example, the electronic device 101) having the highest master preference as the anchor master (or a master electronic device) through the exchanged signals.

The anchor master (for example, the electronic device 101) may be an electronic device which is the reference of the time and channel synchronization of the electronic devices 101, 210, 220, and/or 230 within the cluster 200. The anchor master may be changed according to master preference of the electronic devices 101, 210, 220, and/or 230. Each of the time and channel synchronized electronic devices 101, 210, 220, and/or 230 may transmit a beacon and/or an SDF within a discovery window (or a search section) repeated according to a preset period and receive a beacon and an SDF from other electronic devices 101, 210, 220, and/or 230 within the cluster 200. According to some examples, the beacon may be periodically transmitted and/or received in every discovery window in order to continuously maintain the time and channel synchronization of electronic devices 101, 210, 220, and/or 230 within the cluster 200. The SDF may be transmitted and/or received in the discovery window as necessary in order to provide a service with the electronic devices 101, 210, 220, and/or 230. The electronic device (for example, the electronic device 101) operating as the anchor master among the time and channel synchronized electronic devices 101, 210, 220, and/or 230 may transmit a beacon to detect a new electronic device in a section between discovery windows.

Each of the NAN-cluster-synchronized (for example, time and/or channel synchronized) electronic devices 101, 210, 220, and/or 230 may transmit a NAN action frame (NAF) within the discovery window (or the search section) and receive an NAF from other electronic devices within the cluster 200. For example, the NAF may include at least one piece of information related to a configuration of a NAN data path (NDP) to perform data communication in a section between discovery windows, information related to scheduling update, or information related to NAN ranging. For example, the NAF may control scheduling of radio resources for coexistence of the NAN operation and the non-NAN operation (for example, Wi-Fi Direct, mesh, IBSS, WLAN, Bluetooth, or NFC). The NAF may include time and/or channel information used for NAN communication.

Each of the electronic devices 101, 210, 220, and/or 230 in the cluster 200 may operate in an active state during a discovery window and operate in a low-power state (for example, a sleep state) during the remaining sections other than the discovery window, thereby reducing power consumption.

The discovery window may be a time period (for example, millisecond) during which the electronic device is in an active state (or a wake state) and has increased power consumption, but the electronic device may maintain the sleep state and can perform low-power discover in the sections other than the discovery window.

The electronic devices 101, 210, 220, and/or 230 in the cluster 200 may simultaneously activate at a start time point of the synchronized discovery window (for example, DW start) and simultaneously switch to the sleep state at an end time point of the discovery window (for example, DW end).

Each of the electronic devices 101, 210, 220, and/or 230 in the cluster 200 may transmit and/or receive data not only in the discovery window section but also sections between the discovery windows. In particular, the electronic devices 101, 210, 220, and/or 230 in the cluster 200 may perform additional communication by configuring an active time slot in the section between discovery windows. For example, the electronic devices 101, 210, 220, and/or 230 in the cluster 200 may transmit and/or receive the SDF, which has not been transmitted and/or received in the discovery window section, through the action time slot. For example, the electronic devices 101, 210, 220, and/or 230 in the cluster 200 may configure (or designate) a NAN communication operation section and/or a non-NAN communication operation section during the active time slot, so as to perform NAN communication and/or non-NAN communication during the active time slot.

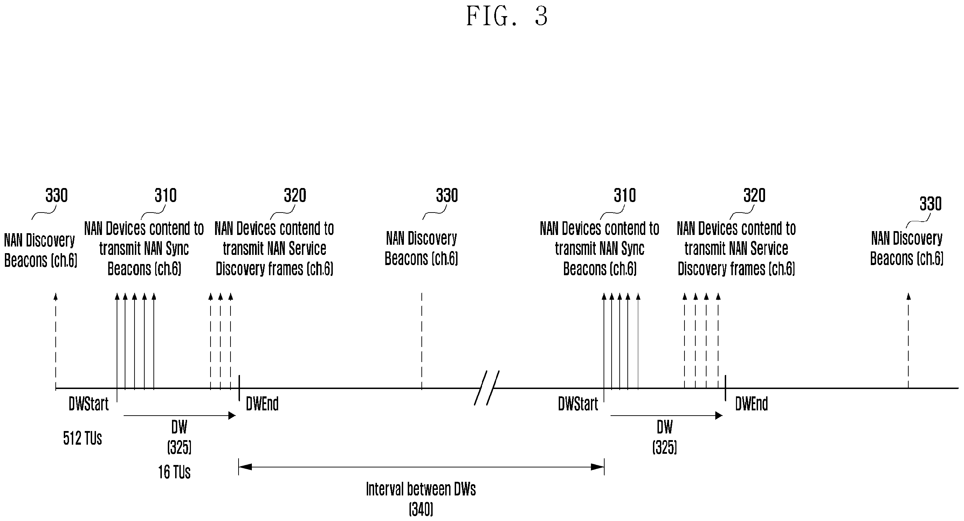

The electronic devices 101, 210, 220, and/or 230 in the cluster 200 may perform discovery, synchronization, and data exchange operations through a protocol illustrated in FIG. 3 described below.

FIG. 3 illustrates a protocol for transmitting signals of electronic devices included in a NAN cluster.

FIG. 3 illustrates an example of the discovery window. In FIG. 3, transmission of signals by electronic devices (for example, the electronic devices 101, 210, 220, and/or 230 of FIG. 2) included in one cluster through a specific channel (for example, channel 6 (Ch6) based on the NAN standard are described as an example.

The electronic devices 101, 210, 220, and/or 230 included in one cluster may transmit a synchronization beacon 310 and an SDF 320 in a synchronized discovery window (DW) 325. In a section (e.g. time period) 340 outside than the discovery windows 325 (for example, an interval between the discovery windows), a discovery beacon 330 may be transmitted by at least one electronic device 101, 210, 220, and/or 230. The electronic devices 101, 210, 220, and/or 230 may transmit the synchronization beacon 310 and the SDF 320 based on contention. For example, the synchronization beacon 310 and the SDF 320 may be transmitted based on contention between respective electronic devices 101, 210, 220, and/or 230 belonging to the cluster.

The electronic devices 101, 210, 220, and/or 230 included in one cluster may transmit and/or receive NAFs in the discovery window (DW) 325. For example, the NAF may include at least one piece of information related to a configuration of a NAN data path (NDP) to perform data communication in the section between discovery windows, information related to a scheduling update, or information related to NAN ranging.

The discovery window 325 may be a section in which the corresponding electronic device 101, 210, 220, and/or 230 is activated from a sleep state corresponding to a power-saving mode to a wake-up state in order to exchange data between the respective electronic devices 101, 210, 220, and/or 230. For example, the discovery window 325 may be separated by a time unit (TU) in the unit of milliseconds (e.g. 1 millisecond). In one example, the discovery window 325 for transmitting and receiving the synchronization beacon 310 and the SDF 320 may occupy 16 time units (16 TUs) and have a cycle (or interval) in which 512 time units (TUs) are repeated.

The discovery beacon 330 may indicate a signal transmitted to allow other electronic devices which are not in the cluster to discover the cluster. For example, the discovery beacon 330 is a signal for informing of the existence of the cluster, and electronic devices which are not in the cluster may discover and join the cluster by performing passive scan and receiving the discovery beacon 330.

The discovery beacon 330 may include information required for synchronization in the cluster 330. For example, the discovery beacon 330 may include at least one of a frame control (FC) field indicating a signal function (for example, a beacon), a broadcast address, a media access control (MAC) address of a transmission electronic device, a cluster identifier (ID), a sequence control field, a time stamp of a beacon frame, a beacon interval indicating a transmission interval of the discovery beacon 330, and capability information of the transmission electronic device transmitting the discovery beacon 330.

The discovery beacon 330 may include at least one proximity network (or cluster)-related information elements. The proximity network-related information may be referred to as attribute information.

The synchronization beacon 310 may indicate a signal for maintaining synchronization between synchronized electronic devices within the cluster. The synchronization beacon 310 may be transmitted by a synchronization device among the electronic devices within the cluster. For example, the synchronization device may include an anchor master electronic device, a master electronic device, or a non-master synchronization (sync) device, defined by the NAN stand.

The synchronization beacon 310 may include information required for synchronization by the electronic devices 101, 210, 220, and/or 230 in the cluster. For example, the synchronization beacon 310 may include at least one of an FC field indicating a signal function (for example, a beacon), a broadcast address, a MAC address of a transmission electronic device, a cluster ID, a sequence control field, a time stamp of a beacon frame, a beacon interval indicating an interval between start time points of the discovery windows 325, or capability information of the transmission electronic device. The synchronization beacon 330 may include/also include at least one proximity network (or cluster)-related information elements. For example, the proximity network-related information may include contents for a service provided through the proximity network.

The SDF 320 may indicate a signal for exchanging data through the proximity network. The SDF 320 may indicate a vender-specific public action frame and may include various fields. For example, the SDF 320 may include a category or an action field and include at least one piece of proximity network-related information.

The synchronization beacon 310, the SDF 320, and the discovery beacon 330 may include proximity network-related information. The proximity network-related information may indicate an identifier indicating a type of the information, a length of the information, and a body field which is the corresponding information. The corresponding information may include at least one piece of master indication information, cluster information, service identifier list information, service descriptor information, connection capability information, wireless LAN infrastructure information, Peer to Peer (P2P) operation information, Independent Basic Service Set (IBSS) information, mesh information, additional proximity network service discovery information, further availability map information, country code information, ranging information, cluster discovery information, and vender-specific information.

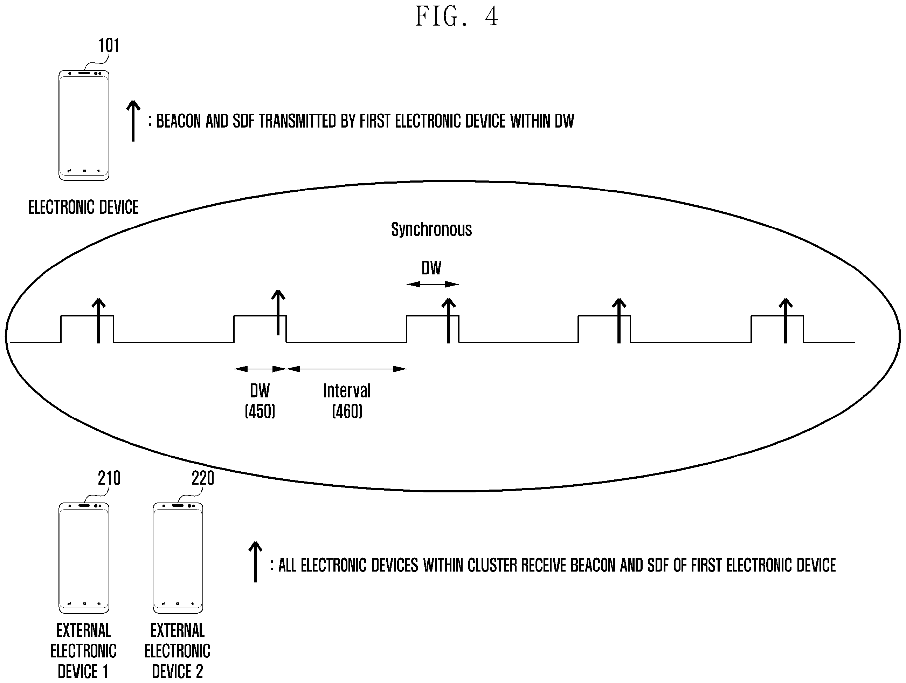

FIG. 4 illustrates an example of data transmission and reception within a NAN cluster.

FIG. 4 illustrates an example in which an electronic device 101, external electronic device 1 210, and external electronic device 2 220 configure one cluster through a wireless short-range communication technology, and the electronic devices 101, 210, and/or 220 may transmit and receive a beacon, an SDF, and/or an NAF to and/or from each other. In particular, FIG. 4 illustrates an example in which the electronic device 101 among the electronic devices 101, 210, and/or 220 included in the cluster serves as a master electronic device.

The electronic device 101 may transmit a beacon, an SDF, and/or an NAF within a discovery window 450. The electronic device 101 may broadcast a beacon, an SDF, and/or an NAF in every discovery window 450 repeated in a preset section (for example, every interval 460).

External electronic device 1 210 and external electronic device 2 220 may receive a beacon, an SDF, and/or an NAF transmitted by the electronic device 101. Each of external electronic device 1 210 and external electronic device 2 220 may receive a beacon, an SDF, and/or an NAF broadcasted from the electronic device 101 in every discovery window 450.

The beacon transmitted within the discovery window 450 may include a synchronization beacon and information for maintaining synchronization between the electronic devices 101, 210, and/or 220. For example, external electronic device 1 210 and external electronic device 2 220 may perform NAN cluster synchronization based on time clock information of the electronic device 101 included in the beacon transmitted by the electronic device 101 operating as a master. External electronic device 1 210 and external electronic device 2 220 may be synchronized and thus the discovery window 450 may be activated at the same time.

In a section (e.g. time interval) other than the discovery window 450 (for example, the interval 460), the electronic devices 101, 210, and/or 220 may maintain a sleep state to reduce power consumption. The electronic devices 101, 210, and/or 220 may reduce power consumption by operating in a wake state (only) during the discovery window 450 based on the synchronized time clock.

In section(s) (e.g. time interval(s)) other than the discovery window 450 (for example, the interval 460), the electronic devices 101, 210, and/or 220 may perform additional communication by configuring an active time slot. The electronic devices 101, 210, and/or 220 may transmit and/or receive an SDF, which was not transmitted and received within the discovery window section, through the active time slot. The electronic devices 101, 210, and/or 220 may designate an operation for the connection of Wi-Fi Direct, mesh IBSS, WLAN, Bluetooth, or NFC to the active time slot, so as to make a legacy Wi-Fi connection through the active time slot or perform the discovery operation.

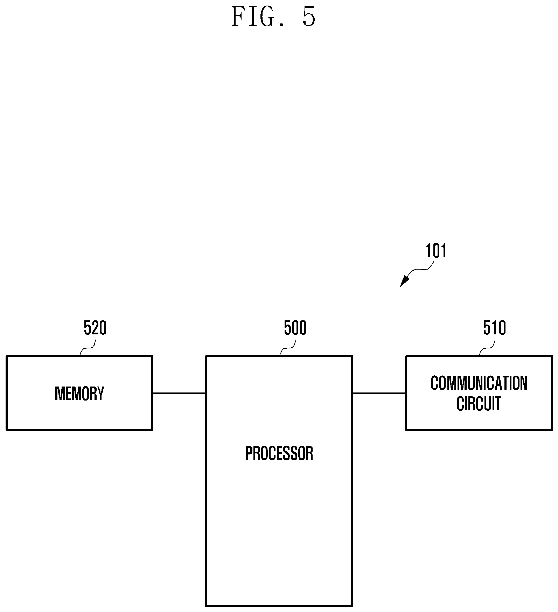

FIG. 5 is a block diagram of an example electronic device for NDP scheduling. The electronic device 101 of FIG. 5 may be at least partially similar to the electronic device 101 of FIG. 1, 2, 3, or 4 or described below.

Referring to FIG. 5, the electronic device 101 may include a processor 500, a communication circuit 510, and/or a memory 520. The processor 500 may be substantially the same as the processor 120 of FIG. 1 (for example, an application processor and/or a communication processor) or may be included in the processor 120. The communication circuit 510 may be substantially the same as the wireless communication module 192 of FIG. 1 or included in the wireless communication module 192. The memory 520 may be substantially the same as the memory 130 of FIG. 1 or may be included in the memory 130. The processor 500 may be operatively, functionally, and/or electrically connected to the communication circuit 510 and/or the memory 520.

The communication circuit 510 may include various circuit structures used for modulating and/or demodulating a signal within the electronic device 101. The communication circuit 510 may modulate a signal in a baseband into a signal in a radio frequency (RF) band to output the signal through an antenna (not shown) or demodulate the signal in the RF band received through the antenna into the signal in the baseband, and transmit the signal to the processor 500.

The communication circuit 510 may transmit and/or receive various pieces of data to and/or other electronic devices (for example, the electronic devices 101, 210, 220, and/or 230 of FIG. 2) through a frequency band (for example, a band of about 2.4 GHz, a band of about 5 GHz, and/or a band of about 6 GHz) used by the electronic devices 101, 210, 220, and/or 230 of FIG. 2 of the NAN cluster (for example, the cluster 200 of FIG. 2). The communication circuit 510 may simultaneously transmit and/or receive signals and/or data through a first frequency band (for example, a band of 6 GHz) and a third frequency band (for example, a band of 2.4 GHz) or a second frequency band (for example, a band of about 5 GHz) and the third frequency band (for example, the band of 2.4 GHz). The communication circuit 510 cannot simultaneously use the first frequency band (for example, the band of about 6 GHz) and the second frequency band (for example, the band of about 5 GHz) for data communication. For example, this may be due to function limitations of the communication circuit 510. However, it should be noted that in some examples, the communication circuit 510 may be capable of simultaneously using the first frequency band and the second frequency band but configured not to.

The processor 500 may perform synchronization with the NAN cluster based on NAN cluster information included in signals broadcasted by external electronic devices (for example, the external electronic devices 210, 220, and/or 230 of FIG. 2) included in the cluster (or network) (for example, the cluster 200 of FIG. 2) implemented in a neighbor awareness networking (NAN) scheme.

The processor 500 may receive NAN cluster information through another communication scheme which is not based on NAN (for example, short-range wireless communication including Bluetooth or Wi-Fi). The processor 500 may control the communication circuit 510 to transmit a probe request signal for discovering external electronic devices (for example, the external electronic devices 210, 220, and/or 230 of FIG. 2) to be connected through Wi-Fi. The processor 500 may perform NAN cluster synchronization based on NAN cluster information included in a probe response message received from the external electronic devices (for example, the external electronic devices 210, 220, and/or 230 of FIG. 2) in response to the probe request signal.

The NAN cluster synchronization may include an operation of receiving time clock information of the electronic device representing the NAN cluster (or a master device of the NAN cluster) (for example, the electronic device 101 of FIG. 2) to allow the electronic devices (for example, the electronic devices 101, 210, 220, and/or 230 of FIG. 2) included in the NAN cluster to transmit and/or receive data through the same channel (e.g. frequency band) and/or the same time resource. The processor 500 may control the communication circuit 510 to transmit (or broadcast) a beacon including the time clock information of the electronic device 101 through the discovery window in order to perform NAN cluster synchronization of the external electronic devices (for example, the external electronic devices 210, 220, and/or 230 of FIG. 2). The processor 500 may perform NAN cluster synchronization based on time clock information of the external electronic devices (for example, the external electronic devices 210, 220, and/or 230 of FIG. 2) included in the beacon received from the external electronic devices (for example, the external electronic devices 210, 220, and/or 230 of FIG. 2).

The processor 500 may search for at least one external electronic device for data transmission. The processor 500 may control the communication circuit 510 to search for external electronic devices for data transmission based on the generation of a data transmission event. For example, the processor 500 may search for at least one external electronic device for data transmission through a Bluetooth (or BLE) message exchange. For example, the Bluetooth message exchange may include a series of operations for transmitting a BLE advertisement message including information related to the data transmission event and receiving a BLE response message for the BLE advertisement message. For example, the processor 500 may control the communication circuit 510 to transmit the BLE advertisement message including information related to the data transmission event and information related to NAN. The processor 500 may control the communication circuit 510 to activate NAN communication based on transmission of the BLE advertisement message. At least one external electronic device (for example, the external electronic devices 210, 220, and/or 230 of FIG. 2) may activate NAN communication based on the BLE advertisement message. The electronic device 101 and at least one external electronic device (for example, the external electronic devices 210, 220, and/or 230) may perform NAN cluster synchronization. The processor 500 may search for at least one external electronic device for data transmission by means of an SDP exchange through the discovery window. For example, the data transmission event may be generated based on at least one of execution of an application related to data transmission, an input of a control signal related to data transmission, or reception of a user input related to data transmission.

The processor 500 may perform scheduling for configuring a NAN data path with at least one external electronic device. The processor 500 may control the communication circuit 510 to transmit at least one of NAN availability attribute or non-NAN operation scheduling information (unaligned scheduled attribute) including information related to scheduling for data communication with the external electronic device to at least one external electronic device. For example, at least one piece of the NAN availability information or the non-NAN operation scheduling information may be inserted into a beacon, an SDF, and/or an NAF and transmitted to at least one external electronic device through the discovery window. For example, the NAN availability information may include information related to one of channel information to be used for each further available window (FAW), frequency band information, a start time point (start offset), duration (bit duration), or a repetition period. For example, the channel information may designate an operating class and may be used for configuring a primary channel. For example, the frequency band information may include information related to a frequency band (for example, a band of about 2.4 GHz, a band of about 5 GHz, and/or a band of about 6 GHz) to be used for data communication with the external electronic device. For example, the start time point may be used to indicate how far the further available window (FAW) starts from the discovery window (DW). For example, the duration may be used to indicate a maintenance time of the further availability window (FAW). For example, the repetition period may be used to indicate a period on which the further availability window (FAW) starts again. For example, the further availability window may include a NAN slot in which the electronic device 101 transmits and/or receives data to and/or from the external electronic device between discovery windows.

The processor 500 may perform scheduling (i.e. generate scheduling-related information) for multiple different resources (e.g. time and/or frequency). The information related to the scheduling (i.e. scheduling information) for data communication with the external electronic device may include scheduling information for different time sections/periods/resources. For example, the processor 500 may control the communication circuit 510 to transmit at least one piece of first scheduling information for a first time section (for example, a first further availability window) and second scheduling information for a second time section (for example, a second further availability window) different from the first time section to at least one external electronic device. For example, the first time section is a time section commonly used by the electronic devices (for example, the electronic device 101 and external electronic device 1 210) establishing the NDP, and a frequency channel of the NDP may be fixedly used in the first time section (i.e. only a preset frequency channel or a single frequency channel agreed between the devices can be used in the first time section). For example, the second time section is a time section which does not overlap the first time section between discovery windows, and a channel of the NDP may be variable. For example, scheduling information for different time sections may include first scheduling information for the first time section and second scheduling information for the second time section, as shown in [Table 1] below. For example, scheduling information for different time sections may be configured as vendor-specific attributes which can be included in a NAN frame. The first and second time sections may be periodic and/or interleaved with one another. It should also be understood that there may be more than two types of time sections. As shown below, the schedule of the first time section(s) and the second time section(s) may be labelled as schedule 1 and schedule 2 respectively.

**[Table 1]**

| | |
|---|---|
| First scheduling | |
| | schedule number: 1 |
| | Scheduling information of first time section |
| Second scheduling | |
| | schedule number: 2 |
| | Scheduling information of second time section |
| initial schedule number → 1 | |

The processor 500 may receive a response signal to the scheduling information (e.g., first scheduling information and/or second scheduling information) from at least one external electronic device. For example, when the response signal includes information related to `accept', the processor 500 may determine that data communication with at least one external electronic device can be performed based on the scheduling information transmitted to at least one external electronic device. For example, when the response signal includes information related to `modification proposal (counter)', the processor 500 may identify scheduling information modified by at least one external electronic device. When it is determined that the modified scheduling information is accepted, the processor 500 may determine that data communication can be performed with at least one external electronic device based on the modified scheduling information. For example, when the response signal includes information related to 'reject', the processor 500 may determine that data communication cannot be performed with at least one external electronic device.

The processor 500 may control the communication circuit 510 to perform data communication with the external electronic device based on first scheduling information for the first time section among the scheduling information for configuring the NAN data path with at least one external electronic device. In particular, the processor 500 may control the communication circuit 510 to transmit and/or receive data to and/or from the external electronic device through the first time section configured between discovery windows.

Subsequently or simultaneously, the processor 500 may identify whether the second scheduling information (i.e. resources scheduled by the second scheduling information) for the second time section can be used for configuring the NAN data path with at least one external electronic device. The processor 500 may identify whether the electronic device 101 and/or the external electronic device may use the second scheduling information for the second time section based on frequency channels used for communication with APs and direct communication (for example, Wi-Fi Direct) based on mobile hotspot or WLAN. For example, when the channels used for communication with the APs to which the electronic device 101 and/or the external electronic device are connected and direct communication based on mobile hotspot or WLAN are the same, the processor 500 may determine that the second scheduling information for the second time section can be used i.e. both the first and second time sections can be used. When the channels used for communication with the AP to which the electronic device 101 and/or the external electronic device is connected and direct communication based on mobile hotspot or WLAN are different, the processor 500 may determine that the second scheduling information for the second time section cannot be used i.e. only the first time section. This ability to utilize/not utilize the second time section may be caused by the communication circuit 510 not being able to simultaneously operate over particular combinations of frequency channels. For example, the processor 500 may acquire information related to a channel used for communication with an AP, mobile hotspot, or direct communication (for example, Wi-Fi Direct) based on a WLAN by an external electronic device based on at least one piece of NAN availability information received from the external electronic device through the discovery window, WLAN infrastructure information (extended WLAN infrastructure attribute), or non-NAN operation scheduling information. For example, information related to the channel with the AP to which the external electronic device is connected may be included in a non-NAN operation channel information field of WLAN infrastructure information. For example, at least one piece of the NAN availability information, the WLAN infrastructure information, or the non-NAN operation scheduling information may be included in a beacon, an SDF, and/or an NAF transmitted and/or received through the discovery window. For example, the channel with the AP to which the electronic device 101 is connected may indicate a channel used (or allocated) for WLAN communication of the electronic device 101 with the AP. For example, the channel with the AP to which the external electronic device may indicate a channel used (or allocated) for WLAN communication of the external electronic device with the AP.

When the electronic device 101 and the external electronic device are not connected to the AP, the processor 500 may determine that the second scheduling information for the second time section can be used.

The processor 500 may control the communication circuit 510 to perform data communication with the external electronic device based on the first scheduling information for the first time section and the second scheduling information for the second time section based on the determination that the second scheduling information can be used. The processor 500 may control the communication circuit 510 to transmit and/or receive data to and/or from the external electronic device through the first time section and the second time section configured between discovery windows.

When channels with APs to which the electronic device 101 and the external electronic device are connected become different due to a change in at least one of the channel with the AP to which the electronic device 101 is connected and the channel with the AP to which the external electronic device is connected, the processor 500 may control the communication circuit 510 to limit (e.g. stop) the use of the second scheduling information for the second time section due to the frequency channel limitations of the communication circuit 510. Correspondingly, when channels with APs to which the electronic device 101 and the external electronic device are connected are become the same due to a change in at least one of the channel with the AP to which the electronic device 101 is connected and the channel with the AP to which the external electronic device is connected, the processor 500 may control the communication circuit 510 to utilize the second scheduling information for the second time section.

The information related to the scheduling for data communication with the external electronic device may alternatively or additionally include scheduling information for different frequency bands (or channels) that are simultaneous in time. For example, the processor 500 may control the communication circuit 510 to transmit at least one piece of the first scheduling information for the first frequency band (for example, the band of about 6 GHz) and the second scheduling information for the second frequency band (for example, the band of about 5 GHz) different from the first frequency band to at least one external electronic device. For example, scheduling information for different frequency bands may include information related to a further available window for data communication in each frequency band. For example, the information related to the further availability information for data communication may include information related to one of channel information to be used for each further available window (FAW), frequency band information, a start time point (start offset), duration (bit duration), or a repetition period. In other words, compared to the previous implementation where the different scheduling information (first and second) related to resources that were at least separated in time, in this alternative implementation the different scheduling information relates to resources that are at least separated in frequency.

For example, the scheduling information for different frequency bands may include the first scheduling information for the first frequency band and the second scheduling information for the second frequency band, as shown in [Table 2] below. For example, the scheduling information for different frequency bands may be configured as vendor-specific attributes that can be included in a NAN frame.

**[Table 2]**

| | | |
|---|---|---|
| First scheduling | | |
| | schedule number: 1 | |
| | Based on first frequency band, | |
| | | First frequency band or combination of first frequency band and channel of AP |
| Second scheduling | | |
| | schedule number: 2 | |
| | Based on second frequency band, | |
| | | Second frequency band or combination of second frequency band and channel of AP |
| initial schedule number → 1 | | |

The processor 500 may receive a response signal for scheduling information from external electronic device 1 210. For example, when the response signal includes information related to `accept', the processor 500 may determine that data communication with external electronic device 1 120 can be performed based on the scheduling information transmitted to external electronic device 1 210. For example, when the response signal includes information related to `modification proposal (counter)', the processor 500 may identify scheduling information modified by external electronic device 1 210. When it is determined that the modified scheduling information is accepted, the processor 500 may determine that data communication with external electronic device 1 210 can be performed based on the modified scheduling information. For example, when the response signal includes information related to 'reject', the processor 500 may determine that data communication with external electronic device 1 210 cannot be performed.

The processor 500 may control the communication circuit 510 to perform data communication with external electronic device 1 210 based on the first scheduling information for the first frequency band. The processor 500 may control the communication circuit 510 to transmit and/or receive data to and/or from external electronic device 1 210 through a further availability window of the first frequency band configured between discovery windows. For example, the processor 500 may control the communication circuit 510 to perform data communication with external electronic device 1 210 based on the first scheduling information for the first frequency band having a relatively wide band and thus expected to have relatively higher data transmission performance among the plurality of resources.

If an external electronic device 2 220 for transmitting data is detected during data communication with external electronic device 1 210, the processor 500 may perform scheduling for configuring a NAN data path with external electronic device 2 220. When external electronic device 2 220 supports the first frequency band, the processor 500 may perform scheduling for configuring a NAN data path with external electronic device 2 220 based on the first frequency band and the processor 500 may maintain data communication with external electronic device 1 210 based on the first scheduling information (i.e. using the first frequency band). For example, the processor 500 may control the communication circuit 510 to transmit and/or receive data to and/or from external electronic device 1 210 and/or external electronic device 2 220 through a further availability window of the first frequency band between discovery windows.

When external electronic device 2 220 does not support the first frequency band, the processor 500 may control the communication circuit 510 to update the NAN data path for data communication with external electronic device 1 210 based on the second scheduling information (i.e the second frequency band). For example, the processor 500 may control the communication circuit 510 to transmit information related to a change to the second scheduling information to external electronic device 1 210. For example, the processor 500 may control the communication circuit 510 to update the NAN data path for data communication with external electronic device 1 210 based on the second scheduling information in response to reception of an acknowledgement message (for example, ACK) related to information on the change to the second scheduling information. For example, the processor 500 may control the communication circuit 510 to update the NAN data path for data communication with external electronic device 1 210 based on the second scheduling information in response to transmission of the information on the change to the second scheduling information. For example, the information on the change to the second scheduling information may be included in an SDF and/or an NAF transmitted and/or received within the discovery window.

The processor 500 may perform scheduling related to the configuration of the NAN data path based on the second frequency band with external electronic device 2 220 based on the scheduling change of the NAN data path with external electronic device 1 210. The processor 500 may control the communication circuit 510 to perform data communication with external electronic device 1 210 based on the second scheduling information. For example, the processor 500 may control the communication circuit 510 to transmit and/or receive data to and/or from external electronic device 1 210 and/or external electronic device 2 220 through a further availability window of the second frequency band between discovery windows.

The memory 520 may store various pieces of data used by at least one element (for example, the processor 500 and/or the communication circuit 510) of the electronic device 101. The memory 520 may also store various instructions which can be executed through the processor 500.

An electronic device (for example, the electronic device 101 of FIG. 1, 2, 3, 4, or 5) may include a communication circuit (for example, the communication module 192 of FIG. 1 or the communication circuit 510 of FIG. 5) and a processor (for example, the processor 120 of FIG. 1 or the processor 500 of FIG. 5) operatively connected to the communication circuit. The processor may perform scheduling for different time sections based on a request for configuring NAN data path (NDP) scheduling with an external electronic device included in a cluster of neighbor awareness networking (NAN). Accordingly, first scheduling information corresponding to a first time section(s) (i.e. specifying scheduling of resources within the first time section(s)) is generated. If second time section(s) are present, second scheduling information is generated, and similar applies for third time section(s) and so forth if present. Therefore, a plurality of different instances of scheduling information may be generated. The processor may transmit or receive data to or from the external electronic device based on first scheduling information corresponding to a first time section. The processor may also identify channels of the electronic device and the external electronic device allocated in a second time section different from the first time section. When the electronic device and the external electronic device use the same channel in the second time section, the processor may transmit or receive data to or from the external electronic device based on the first scheduling information corresponding to the first time section and second scheduling information corresponding to the second time section.

The processor may transmit or receive data to or from the external electronic device through the first time section between discovery windows based on the first scheduling information.

When the electronic device and the external electronic device use the same channel in the second time section, the processor may transmit information related to the second scheduling information to the external electronic device and transmit or receive data to or from the external electronic device through the first time section and the second time section between discovery windows based on the first scheduling information and the second scheduling information.

The processor may transmit the information related to additional use of the second scheduling information (i.e. second time sections) to the external electronic device within the discovery window and/or the first time section.

The processor may identify the channel of the external electronic device based on at least one piece of NAN availability information (NAN availability attribute), WLAN infrastructure information (extended WLAN infrastructure attribute), or non-NAN operation schedule information (unaligned scheduled attribute) received from the external electronic device within the discovery window.

The processor may transmit information related to the first time section and the second time section included between discovery windows to the external electronic device and perform scheduling for different time sections based on a response to the information related to the first time section and the second time section received from the external electronic device.

The information related to the time sections may include at least one of channel information used in the respective time sections, a frequency band, a start time point (start offset), duration (bit duration), or a repetition period.

When channels used by the electronic device and the external electronic device in the second time section are different, the processor may limit (e.g. stop) the use of the second scheduling information (i.e. limit the use of the second time section/the resources of the second time section).

The processor may limit the use of the second scheduling information based on a change in the channel used by the electronic device and/or the external electronic device in the second time section.

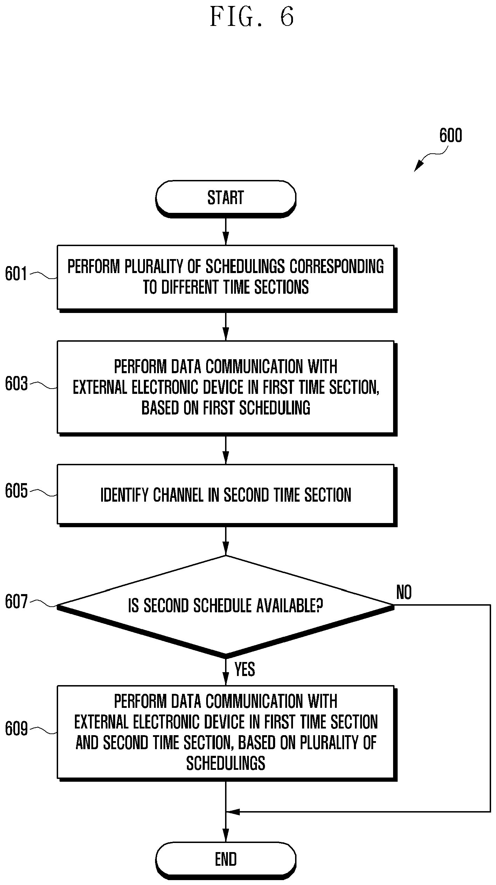

The use of first scheduling information for a first time section and second scheduling information for a second time section is described in more detail with respect to FIGs. 6 to 10.

An electronic device (for example, the electronic device 101 of FIG. 1, 2, 3, 4, or 5) may include a communication circuit (for example, the communication module 192 of FIG. 1 or the communication circuit 510 of FIG. 5) and a processor (for example, the processor 120 of FIG. 1 or the processor 500 of FIG. 5) operatively connected to the communication circuit. The processor may perform scheduling for different frequency bands based on a request for configuring NAN data path (NDP) scheduling with a first external electronic device included in a cluster of neighbor awareness networking (NAN). The processor may perform data communication with the first external electronic device based on first scheduling information corresponding to a first frequency band. When a second external electronic device is detected during the data communication with the first external electronic device, the processor may identify whether the second external electronic devices supports the first frequency band. When the second external electronic device does not support the first frequency band, the processor may change the scheduling for the data communication with the first external electronic device to second scheduling corresponding to a second frequency band (e.g. scheduling based on second scheduling information). The processor may perform scheduling for the second frequency with the second external electronic device.

When the second external electronic device does not support the first frequency band, the processor may transmit information related to a change of scheduling information to the first external electronic device through a service discovery frame (SDF) or a NAN action frame (NAF) within a discovery window and change the scheduling for the data communication with the first external electronic device to the second scheduling corresponding to the second frequency band (e.g. scheduling based on second scheduling information).

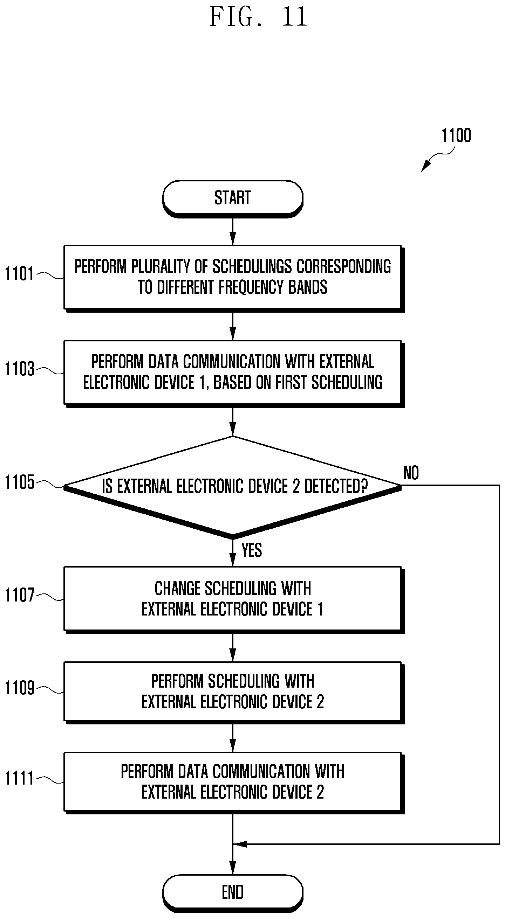

The use of first scheduling information for a first frequency band and second scheduling information for a second frequency band is described in more detail with respect to FIGs. 11 to 13.

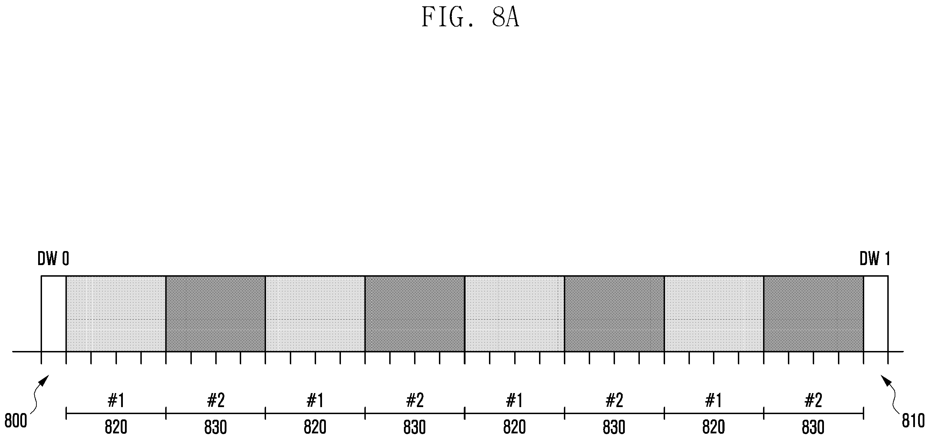

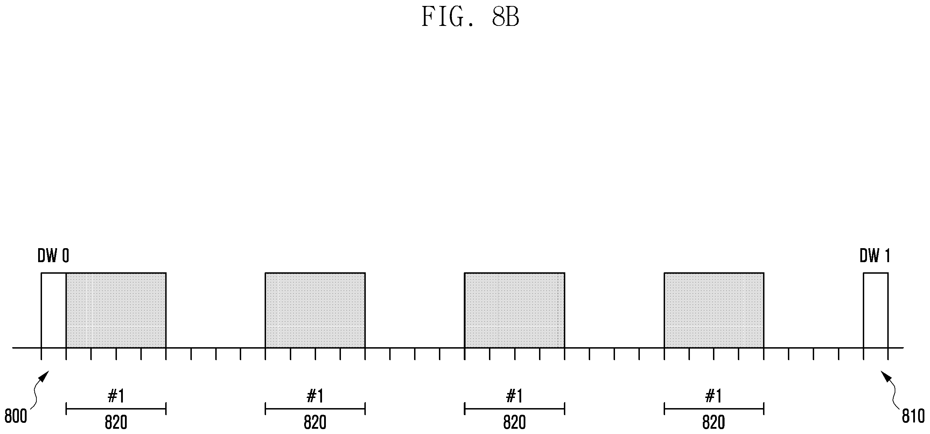

FIG. 6 is a flowchart 600 illustrating a process in which the electronic device performs scheduling based on time resources. In the following processes, respective operations may be sequentially performed but the sequential performance is not necessary. For example, orders of the operations may be changed, operations omitted, and at least two operations may be performed in parallel or combined. For example, the electronic device of FIG. 6 may be the electronic device 101 of FIG. 1, 2, 3, 4, or 5. For example, at least some of FIG. 6 may be described with reference to FIGs. 8A and 8B. FIG. 8A illustrates an example of time resources when a plurality of time sections are used by the electronic device (i.e. first sections 820 and second sections 830). FIG. 8B illustrates an example in which the electronic device uses only one time section (i.e. time sections 820).

Referring to FIGs. 6, 8A, and 8B, an electronic device (for example, the electronic device 101 of FIG. 1, 2, 3, 4, or 5) or a processor (for example, the processor 120 of FIG. 1 or the processor 500 of FIG. 5) may perform scheduling (e.g., a plurality of scheduling) corresponding to different time sections for configuring an NDP with at least one external electronic device within a cluster in operation 601. The processor 500 may perform synchronization with the NAN cluster with external electronic devices (for example, the external electronic devices 210, 220, and/or 230 of FIG. 2) included in the cluster (or network) (for example, the cluster 200 of FIG. 2) implemented in a neighbor awareness networking (NAN) scheme. For example, NAN cluster synchronization may include a series of operations for synchronizing the time and/or frequencies (or channels) based on a beacon transmitted and/or received through a discovery window.

The processor 500 may search for an external electronic device for data transmission based on the generation of a data transmission event. For example, the processor 500 may search for at least one external electronic device for data transmission based on a Bluetooth message exchange scheme. For example, the processor 500 may search for at least one external electronic device for data transmission by SDP exchange through the discovery window.

The processor 500 may control the communication circuit 510 to perform scheduling for different time sections (i.e. time resources, time periods etc.) for configuring an NDP with at least one external electronic device. For example, the processor 500 may control the communication circuit 510 to transmit at least one piece of first scheduling information for a first time section(s) 820 and second scheduling information for a second time section(s) 830 of FIG. 8A to at least one external electronic device. For example, the first time section(s) 820 is a time section commonly used by electronic devices (for example, the electronic device 101 and external electronic device 1 210) configuring the NDP, and a channel (e.g. frequency band) of the NDP may be fixedly used. For example, the second time section(s) 830 is a time section which does not overlap the first time section(s) between discovery windows, and a channel (e.g. frequency band) of the NDP may be variable. For example, information related to the scheduling may be included in at least one piece of NAN availability information or non-NAN operation scheduling information and transmitted to at least one external electronic device. For example, at least one piece of the NAN availability information or the non-NAN operation scheduling information may be inserted into a beacon, an SDF, and/or an NAF and transmitted to at least one external electronic device through the discovery window. For example, the NAN availability information may include information related to one of channel information to be used for each further available window (FAW), frequency band information, a start time point (start offset), duration (bit duration), or a repetition period.

The processor 500 may receive a response signal to the scheduling information from at least one external electronic device. For example, when the response signal includes information related to `accept', the processor 500 may determine that data communication with at least one external electronic device can be performed based on the scheduling information transmitted to at least one external electronic device. For example, when the response signal includes information related to `modification proposal (counter)', the processor 500 may identify scheduling information modified by at least one external electronic device. When it is determined that the modified scheduling information is accepted, the processor 500 may determine that data communication can be performed with at least one external electronic device based on the modified scheduling information. For example, when the response signal includes information related to 'rejection (reject)', the processor 500 may determine that data communication cannot be performed with at least one external electronic device.

The electronic device (for example, the electronic device 101) or the processor (for example, the processor 120 or 500) may initially perform data communication with at least one external electronic device based on the first scheduling information for the first time section(s) 820 from among the scheduling information generated for configuring the NDP with at least one external electronic device in operation 603. The processor 500 may control the communication circuit 510 to transmit and/or receive data to and/or from an external electronic device through the first time section(s) 820 configured between discovery window 0 800 and discovery window 1810 of FIG. 8B.

The electronic device (for example, the electronic device 101) or the processor (for example, the processor 120 or 500) may simultaneously or subsequently identify channels of the electronic device 101 and at least one external electronic device in the second time section(s) 830 in operation 605. The processor 500 may identify channels used for communication with an AP or a channel used for direct communication (for example, Wi-Fi Direct) based on mobile hotspot or WLAN by the electronic device 101 and/or the external electronic device. For example, the processor 500 may acquire information related to the channel used for communication with the AP or direct communication (for example, Wi-Fi Direct) based on mobile hotspot or WLAN by the external electronic device based on at least one piece of NAN availability information received from the external electronic device through the discovery window, WLAN infrastructure information (extended WLAN infrastructure attribute), or non-NAN operation scheduling information. For example, the channel with the AP to which the electronic device (or the external electronic device) is connected may indicate a channel used (or allocated) for WLAN communication with the AP by the electronic device (or the external electronic device).

The electronic device (for example, the electronic device 101) or the processor (for example, the processor 120 or 500) may determine whether second scheduling information (i.e. information on the use of the second time section) can be used for data communication with at least one external electronic device based on the channel of the electronic device 101 and at least one external electronic device in the second time section(s) 830 in operation 607. When the electronic device 101 and the external electronic device are not connected to the AP, the processor 500 may determine that the second scheduling information for the second time section(s) 830 can be used. The processor 500 may identify whether the electronic device 101 and/or the external electronic device may use the second scheduling information for the second time section(s) 830 based on communication with an AP or a channel used for direct communication (for example, Wi-Fi Direct) based on a WLAN. For example, when the channels used for communication with the AP to which the electronic device 101 and/or the external electronic device is connected and direct communication based on mobile hotspot or WLAN are the same, the processor 500 may determine that the second scheduling information for the second time section(s) 830 can be used. When the channels used for communication with the AP to which the electronic device 101 and/or the external electronic device is connected and direct communication based on mobile hotspot or WLAN are different, the processor 500 may determine that the second scheduling information for the second time section(s) 830 cannot be used.

When it is determined that the second scheduling information cannot be used for data communication with at least one external electronic device (for example, 'No' of operation 607), the electronic device (for example, the electronic device 101) or the processor (for example, the processor 120 or 500) may end the process of attempting to use both the first time section(s) and the second time section(s) for communications. When the channels used for communication with the AP or direct communication (for example, Wi-Fi Direct) based on mobile hotspot or WLAN by the electronic device 101 and/or at least one external electronic device in the second time section(s) 830 are different, the channels used by the electronic device 101 and at least one external electronic device in the second time section are different and thus the processor 500 may determine that data communication of the electronic device 101 and at least one external electronic device cannot be performed in the second time section(s) 830.

When it is determined that the second scheduling information can be used for data communication with at least one external electronic device (for example, `Yes' of operation 607), the electronic device (for example, the electronic device 101) or the processor (for example, the processor 120 or 500) may perform data communication with at least one external electronic device based on the first scheduling information for the first time section(s) 820 and the second scheduling information for the second time section(s) 830 in operation 609. The processor 500 may control the communication circuit 510 to transmit information related to the second scheduling information to at least one external electronic device during data communication with at least one external electronic device based on the first scheduling information. For example, the information related to the second scheduling information may be included in an SDF and/or an NAF transmitted and/or received within the discovery window. For example, the information related to the second scheduling information may be transmitted within the first time section(s) 820. For example, a signal related to the second scheduling information may include identification information of the second scheduling information or information related to a frequency (or band related to a frequency band) to be used by the electronic device 101 in the second time section(s) 830.

The processor 500 may control the communication circuit 510 to transmit and/or receive data to and/or from the external electronic device through the first time section(s) 820 and the second time section(s) 830 configured between discovery window 0 800 and discovery window 1810 of FIG. 8A.

The electronic device 101 may designate first scheduling information and second scheduling information as scheduling to be initially used when further scheduling information has been generated (e.g. third scheduling information corresponding to a third time section(s)). When it is determined that data communication with the external electronic device can be performed in the second time section(s) based on the channels of the electronic device 101 and the external electronic device in the second time section(s), the electronic device 101 may designate first scheduling information and second scheduling information as scheduling information to be initially used. The electronic device 101 may transmit and/or receive data to and/or from at least one external electronic device through the first time section(s) and the second time section(s) between discovery windows based on the first scheduling and the second scheduling.

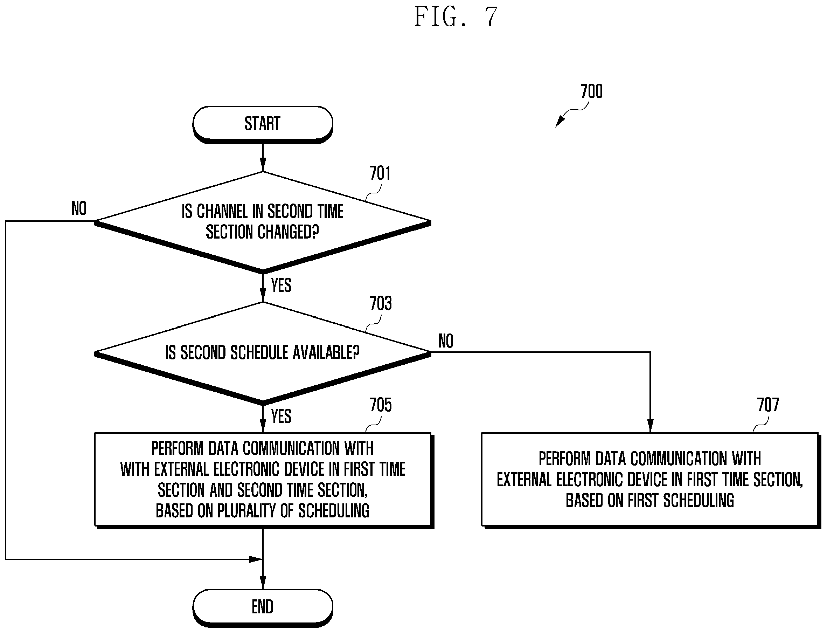

FIG. 7 is a flowchart 700 illustrating a process in which the electronic device uses second scheduling information . In the following processes, respective operations may be sequentially performed but the sequential performance is not necessary. For example, orders of the operations may be changed, operations omitted, and at least two operations may be performed in parallel or combined. For example, the electronic device of FIG. 7 may be the electronic device 101 of FIG. 1, 2, 3, 4, or 5. The process of FIG. 7 may be implemented independently or following on from the end of the process of FIG. 6 where reassessment of the ability to the use the second time section(s) (i.e. second scheduling information) may be beneficial due to the change in channel usage.

Referring to FIG. 7, an electronic device (for example, the electronic device 101 of FIG. 1, 2, 3, 4, or 5) or a processor (for example, the processor 120 of FIG. 1 or the processor 500 of FIG. 5) may identify whether channels of the electronic device 101 and/or at least one external electronic device are changed in a second time section(s) in operation 701. The processor 500 may identify whether channels of the electronic device 101 and/or at least one external electronic device are changed in the second time section(s) during data communication with at least one external electronic device through a first time section(s) and/or the second time section(s). For example, when the channels of the electronic device 101 and/or at least one external electronic device in the second time section are the same, the processor 500 may control the communication circuit 510 to perform data communication with at least one external electronic device through the first time section(s) and the second time section(s) between discovery windows. For example, when the channels of the electronic device 101 and/or at least one external electronic device in the second time section(s) are different, the processor 500 may control the communication circuit 510 to perform data communication with at least one external electronic device through the first time section(s) between discovery windows. For example, the data communication in the first time section(s) may be performed based on first scheduling information. For example, the data communication in the second time section(s) may be performed based on second scheduling information.

When the electronic device 101 accesses an AP, the connection between the electronic device 101 and the AP is released, or the channel used for access to the AP is changed, the processor 500 may determine that the channel of the electronic device 101 in the second time section(s) is changed. When the external electronic device accesses an AP, the connection between the external electronic device and the AP is released, or the channel used for access to the AP is changed, the processor 500 may determine that the channel of the external electronic device in the second time section(s) is changed.

When the electronic device 101 operates in a mobile hotspot mode, the electronic device 101 ends the mobile hotspot mode, or a channel used for mobile hotspot is changed, the processor 500 may determine that the channel of the electronic device 101 in the second time section(s) is changed. When the external electronic device operates in a mobile hotspot mode, the electronic device 101 ends the mobile hotspot mode, or a channel used for mobile hotspot is changed, the processor 500 may determine that the channel of the external electronic device in the second time section(s) is changed.

When the electronic device 101 performs direct communication (for example, Wi-Fi Direct) based on WLAN, the electronic device 101 ends direct communication based on WLAN, or a channel used for direct communication is changed, the processor 500 may determine that the channel of the electronic device 101 in the second time section(s) is changed. When the external electronic device performs direct communication based on WLAN, the electronic device 101 ends direct communication based on WLAN, or a channel used for direct communication is changed, the processor 500 may determine that the channel of the external electronic device in the second time section(s) is changed.

When the channels of the electronic device 101 and at least one external electronic device in the second time section(s) are not changed (for example, 'No' of operation 701), the electronic device (for example, the electronic device 101) or the processor (for example the processor 120 or 500) may end the process of attempting to use both the first time section(s) and the second time section(s) for communications. When the channels of the electronic device 101 and at least one external electronic device in the second time section are not changed, if the channels of the electronic device 101 and/or at least one external electronic device in the second time section(s) are the same, the processor 500 may control the communication circuit 510 to perform data communication with at least one external electronic device through the first time section(s) and the second time section(s) between discovery windows such as set out for 609 of Fig. 6. For example, when the channels of the electronic device 101 and/or at least one external electronic device in the second time section(s) are different, the processor 500 may control the communication circuit 510 to perform data communication with at least one external electronic device through the first time section(s) between discovery windows such as set out for the 'No' option of 607 of Fig. 6.

When the channels of the electronic device 101 and/or at least one external electronic device in the second time section are changed (for example, `Yes' of operation 701), the electronic device (for example, the electronic device 101) or the processor (for example the processor 120 or 500) may determine whether second scheduling information (i.e. the second time section(s)) can be used for data communication with at least one external electronic device based on the channels of the electronic device 101 and at least one external electronic device in the second time section(s) in operation 703. When the channels used for communication with an AP to which the electronic device 101 and the external electronic device are connected and direct communication (for example, Wi-Fi Direct) based on mobile hotspot or WLAN are the same based on the change of the channels of the electronic device 101 and/or at least one external electronic device in the second time section(s), the processor 500 may determine that the second scheduling information for the second time section(s) can be used. When the channels used for communication with the AP to which the electronic device 101 and the external electronic device are connected and direct communication (for example, Wi-Fi Direct) based on the mobile hotspot or WLAN are different, the processor 500 may determine that the second scheduling information for the second time section(s) cannot be used.

When it is determined that the second scheduling information can be used for data communication with at least one external electronic device (for example, `Yes' of operation 703), the electronic device (for example, the electronic device 101) or the processor (for example, the processor 120 or 500) may perform data communication with at least one external electronic device based on the first scheduling information for the first time section(s) and the second scheduling information for the second time section(s) in operation 705. The processor 500 may control the communication circuit 510 to transmit and/or receive data to and/or from the external electronic device through the first time section(s) 820 and the second time section(s) 830 configured between discovery window 0 800 and discovery window 1 810 of FIG. 8A.

When it is determined that the second scheduling information cannot be used for data communication with at least one external electronic device (for example, 'No' of operation 703), the electronic device (for example, the electronic device 101) or the processor (for example the processor 120 or 500) may perform data communication with at least one external electronic device based on first scheduling information for the first time section(s) in operation 707. The processor 500 may control the communication circuit 510 to transmit information related to removal of (or limit on) the second scheduling information to at least one external electronic device. For example, the information related to removal of (or limit on) the second scheduling information may be included in an SDF and/or an NAF transmitted and/or received within the discovery window. The processor 500 may control the communication circuit 510 to transmit and/or receive data to and/or from an external electronic device through the first time section(s) 820 configured between discovery window 0 800 and discovery window 1 810.

When data communication with at least one external electronic device is performed in the first time section(s) and the second time section(s) between discovery windows, the electronic device 101 may limit the use of the second time section (s) in order to reduce power consumption. The processor 500 may control the communication circuit 510 to transmit information related to removal of (or limit on) of the second scheduling information to at least one external electronic device in order to limit the use of the second time section(s). For example, the information related to removal of (or limit on) of the second scheduling information may be included in an SDF and/or an NAF transmitted and/or received within the discovery window. The processor 500 may control the communication circuit 510 to transmit and/or receive data to and/or from the external electronic device through the first time section(s) 820 configured between discovery window 0 800 and discovery window 1 810 based on the limit on the use of the second time section(s) as illustrated in FIG. 8B.

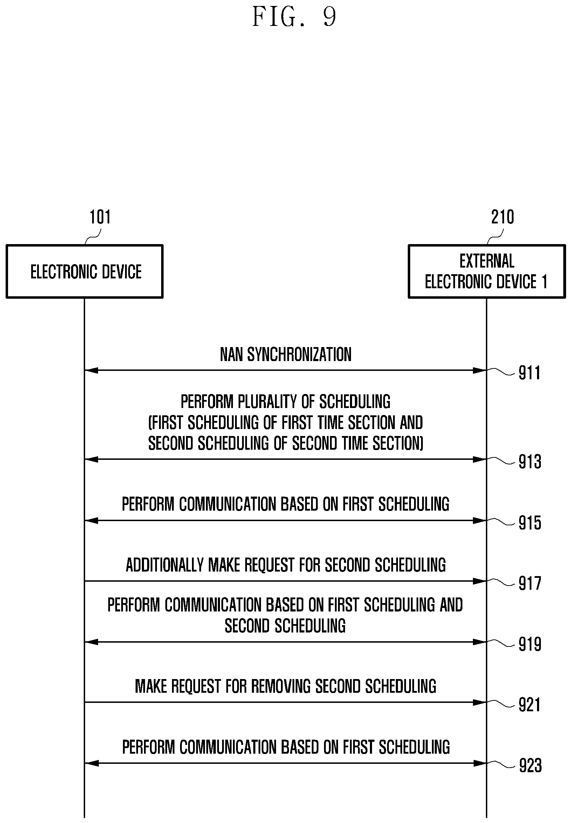

FIG. 9 illustrates an example in which the electronic device performs scheduling based on time resources (e.g. first and second time sections of FIG. 8A).

Referring to FIG. 9, the electronic device 101 and external electronic device 1 210 may perform NAN cluster synchronization in operation 911. The electronic device 101 and external electronic device 1 210 may perform synchronization with the NAN cluster based on NAN cluster information included in signals broadcasted by electronic devices (for example, the electronic devices 101, 210, 220, and/or 230) included in the cluster (or network) (for example, the cluster 200 of FIG. 2) implemented in a NAN scheme. For example, NAN cluster synchronization may include a series of operations of synchronizing time resources and frequency resources (for example, channels) by the electronic device 101 and external electronic device 1 210 included in the NAN cluster. For example, the NAN cluster synchronization may be performed based on time clock information of an electronic device (or a master device of the NAN cluster) (for example, the electronic device 101 of FIG. 2) which represents the electronic devices (for example, the electronic devices 101, 210, 220, and/or 230 of FIG. 2) included in the NAN cluster.

The electronic device 101 and external electronic device 1 210 may scheduling corresponding to different time sections in order to configure the NDP for data communication in operation 913. The electronic device 101 may transmit first scheduling information for the first time section(s) 820 and second scheduling information for the second time section(s) 830 of FIG. 8A to external electronic device 1 210 in order to configure the NDP with external electronic device 1 210. For example, information related to the scheduling may be included in at least one piece of NAN availability information or non-NAN operation scheduling information and transmitted to external electronic device 1 210 through the discovery window. For example, the NAN availability information may include information related to one of channel information to be used for each further available window (FAW), frequency band information, a start time point (start offset), duration (bit duration), or a repetition period. The electronic device 101 may receive a response signal in response to the scheduling information from external electronic device 1 210. For example, when the response signal includes information related to `accept', the electronic device 101 may establish an NDP session for data communication with external electronic device 1 210 based on the scheduling information transmitted to external electronic device 1 210. For example, when the response signal includes information related to `modification proposal (counter)', the electronic device 101 may identify scheduling information modified by external electronic device 1 210. When it is determined that the scheduling information modified by external electronic device 1 210 is accepted, the electronic device 101 may establish an NDP session for data communication with external electronic device 1 210 based on the modified scheduling information. For example, the first scheduling information for the first time section(s) 820 and/or the second scheduling information for the second time section(s) 830 may include identification information (for example, an ID or a schedule number of [Table 1]) for identifying the scheduling information. For example, the identification information for identifying the scheduling information may be used to add an operation of the scheduling or remove the scheduling information.

The electronic device 101 and external electronic device 1 210 may perform data communication through the first time section(s) based on the first scheduling information in operation 915. When first scheduling information is configured as scheduling information (initial schedule number) to be initially used among the instances of plurality of scheduling information (e.g. first, second etc.), the electronic device 101 and external electronic device 1 210 may perform data communication through the first time section(s) based on the first scheduling information in operation 915.

The electronic device 101 may determine whether the second scheduling information can be additionally used for data communication with external electronic device 1 210 based on channels of the electronic device 101 and external electronic device 1 210 in the second time section(s). When the electronic device 101 and external electronic device 1 210 are not connected to the AP, the electronic device 101 may determine that the second scheduling information for the second time section(s) can be used for data communication with external electronic device 1 210. When channels with APs to which the electronic device 101 and external electronic device 1 210 are connected are the same, the electronic device 101 may determine that the second scheduling information for the second time section(s) can be used for data communication with external electronic device 1 210. When the channel used by the electronic device 101 for mobile hotspot and the channel with the AP to which external electronic device 1 210 is connected are the same, the electronic device 101 may determine that the second scheduling information for the second time section(s) can be used for data communication with external electronic device 1 210. When the channel used by external electronic device 1 210 for mobile hotspot and the channel with the AP to which the electronic device 101 is connected are the same, the electronic device 101 may determine that the second scheduling information for the second time section(s) can be used for data communication with external electronic device 1 210. When the channels used by the electronic device 101 and external electronic device 1 210 for mobile hotspot are the same, the electronic device 101 may determine that the second scheduling information for the second time section(s) can be used for data communication with external electronic device 1 210. When the channel used by the electronic device 101 for direct communication (for example, Wi-Fi Direct) based on WLAN and the channel with the AP to which external electronic device 1 210 is connected are the same, the electronic device 101 may determine that the second scheduling information for the second time section(s) can be used for data communication with external electronic device 1 210. When the channel used by external electronic device 1 210 for direct communication based on WLAN and the channel with the AP to which the electronic device 101 is connected are the same, the electronic device 101 may determine that the scheduling information for the second time section(s) can be used for data communication with external electronic device 1 210. When the channels used by the electronic device 101 and external electronic device 1 210 for direct communication based on WLAN are the same, the electronic device 101 may determine that the second scheduling information for the second time section(s) can be used for data communication with external electronic device 1 210.

When it is determined that the second scheduling information for the second time section(s) can be used for data communication with external electronic device 1 210, the electronic device 101 may transmit a request signal related to addition of the second scheduling information to external electronic device 1 210 in operation 917. For example, the request signal related to addition of the second scheduling information may include identification information of the second scheduling information or information related to a frequency (or information related to a frequency band) to be used by the electronic device 101 in the second time section(s). For example, the request signal related to addition of the second scheduling information may be transmitted to external electronic device 1 210 within the discovery window and/or the first time section.

The electronic device 101 and external electronic device 1 210 may perform data communication through the first time section(s) and the second time section(s) based on the first scheduling information and the second scheduling information for the NDP configuration based on addition of the second scheduling information in operation 919.

The electronic device 101 may determine whether the second scheduling information can be used for data communication with external electronic device 1 210 based on a change of the channels of the electronic device 101 and/or external electronic device 1 210 in the second time section(s). When the channels with the APs to which the electronic device 101 and the external electronic device are connected are different based on the change of the channels of the electronic device 101 and/or at least one external electronic device in the second time section(s), the electronic device 101 may determine that the second scheduling information for the second time section(s) cannot be used for data communication with external electronic device 1 210.

When it is determined that the second scheduling information for the second time section(s) cannot be used for data communication with external electronic device 1 210, the electronic device 101 may transmit a request signal related to removal of (or limit on) the second scheduling information to external electronic device 1 210 in operation 921. For example, the request signal related to removal of (or limit on) the second scheduling information may be included in an SDF and/or an NAF within the discovery window and transmitted to external electronic device 1 210. For example, the request signal related to removal of (or limit on) the second scheduling information may be transmitted to external electronic device 1 210 within in the first time section(s) and/or the second time section(s).

The electronic device 101 and external electronic device 1 210 may perform data communication through the first time section(s) based on the first scheduling information based on removal of (or limit on) the second scheduling information in operation 923.

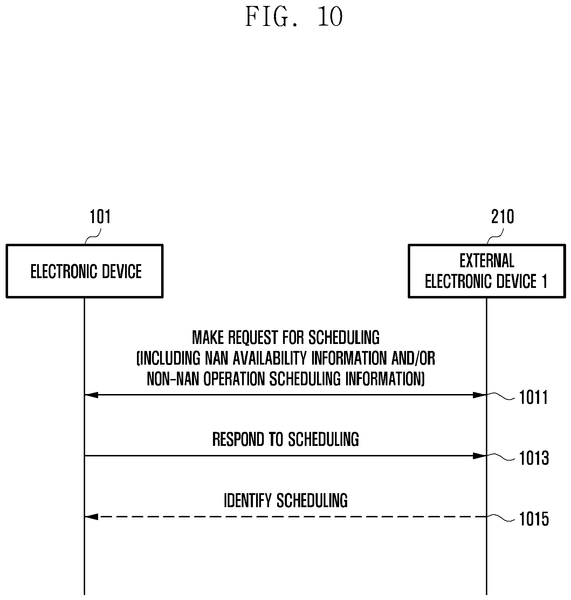

FIG. 10 illustrates an example for scheduling by the electronic device. For example, at least some of FIG. 10 may include the detailed operation of operation 913 of FIG. 9.

Referring to FIG. 10, the electronic device 101 may transmit information related to scheduling for different time sections for configuring the NDP with external electronic device 1 210 to external electronic device 1 210 in operation 1011. For example, the information related to the scheduling may include first scheduling information for a first time section(s) and second scheduling information for a second time section(s) which does not overlap the first time section. For example, the first time section(s) is a time section commonly used by the electronic device 101 and external electronic device 1 210 which configure the NDP, and a channel of the NDP may be fixedly used. For example, the second time section(s) is a time section which does not overlap the first time section between discovery windows, and a channel of the NDP may vary. For example, the information related to the scheduling may be included in at least one piece of NAN availability information and/or non-NAN operation scheduling information and transmitted to external electronic device 1 210 through the discovery window.

The electronic device 101 may receive a response signal in response to the scheduling information from external electronic device 1 210 in operation 1013. When the response message received from external electronic device 1 210 includes information related to `accept', the electronic device 101 may determine external electronic device 1 210 accepts the scheduling information transmitted to external electronic device 1 210. When the response message received from external electronic device 1 210 includes information related to `modification proposal (counter)', the electronic device 101 may identify scheduling information modified by external electronic device 1 210 in the response message. When the response message received from external electronic device 1 210 includes information related to 'reject', the electronic device 101 may determine that data communication with external electronic device 1 210 cannot be performed.

When the response message received from external electronic device 1 210 includes information related to `modification proposal (counter)', the electronic device 101 may transmit a scheduling acknowledgement message to external electronic device 1 210 in operation 1015. When the scheduling information modified by external electronic device 1 210 is accepted, the electronic device 101 may transmit the scheduling acknowledgement message to external electronic device 1 210.

When the response message received from external electronic device 1 210 includes information related to `accept', transmission of the scheduling acknowledgement message may be omitted.

The electronic device 101 and external electronic device 1 210 may perform scheduling based on security settings. The electronic device 101 may transmit information related to the scheduling including the security settings to external electronic device 1 210. External electronic device 1 210 may transmit a response message including the security settings to the electronic device 101. The electronic device 101 may transmit a scheduling acknowledgement message including the security settings to external electronic device 1 210 based on the response message. The electronic device 101 may determine that the scheduling with external electronic device 1 210 is completed based on reception of a message related to completion of the security settings (for example, security install) from external electronic device 1 210.

The approach(es) described above with respect to FIGs. 6 to 10 perform scheduling for the first and second time sections when first configuring an NDP with an external device. Consequently, if the first time section(s) are initially used for the data communication with the external device, if it is subsequently determined that the second time section(s) can also be used, the second time section(s) can be used without additional or at least reduced scheduling compared to existing approaches since the second scheduling information has previously been determined. Reduced negotiations may also result due to both the first and second scheduling information being configured in a single message exchange. In turn this is means that use of the second time section(s) can be implemented with reduced delay compared to existing approaches where scheduling of the second section(s) is performed only when it is determined that the second time section(s) can be used. This reduced delay can increase data transfer speed and the reduced number of messages exchanged may reduce power consumption.

FIG. 11 is a flowchart 1100 illustrating a process in which the electronic device performs scheduling based on frequency resources. In the following processes, respective operations may be sequentially performed but the sequential performance is not necessary. For example, orders of the operations may be changed, operations omitted, and at least two operations may be performed in parallel or combined. For example, the electronic device of FIG. 11 may be the electronic device 101 of FIG. 1, 2, 3, 4, or 5.

Referring to FIG. 11, an electronic device (for example, the electronic device 101 of FIG. 1, 2, 3, 4, or 5) or a processor (for example, the processor 120 of FIG. 1 or the processor 500 of FIG. 5) may perform a scheduling corresponding to different frequency bands (or channels) for configuring an NDP with external electronic device 1 210 within a cluster in operation 1101. The processor 500 may perform NAN cluster synchronization with external electronic devices (for example, the external electronic devices 210, 220, and/or 230 of FIG. 2) included in the cluster (for example, the cluster 200 of FIG. 2) implemented in the NAN scheme. For example, NAN cluster synchronization may include a series of operations of synchronizing time and/or frequencies (or channels) by electronic devices included in the cluster based on a beacon transmitted and/or received through the discovery window.

The processor 500 may search for external electronic device 1 210 for data transmission based on the generation of a data transmission event. For example, the processor 500 may search for external electronic device 1 210 for data transmission through a Bluetooth message exchange scheme or SDP exchange through the discovery window.

The processor 500 may control the communication circuit 510 to perform scheduling for different frequency bands (or channels) for configuring the NDP with external electronic device 1 210. For example, the processor 500 may control the communication circuit 510 to transmit at least one piece of first scheduling information for a first frequency band (for example, a band of about 6 GHz) and second scheduling information for a second frequency band (for example, a band of about 5 GHz) to external electronic device 1 210. For example, information related to the scheduling may be included in at least one piece of NAN availability information or non-NAN operation scheduling information and transmitted to external electronic device 1 210 within the discovery window. For example, the NAN availability information may include information related to one of channel information to be used for each further available window (FAW), frequency band information, a start time point (start offset), duration (bit duration), or a repetition period. For example, the first scheduling information and the second scheduling information may include scheduling information for different frequency bands in the same time section (for example, FAW) between discovery windows. For example, the first frequency band and the second frequency band may include frequency bands which cannot be simultaneously used by the communication circuit 510.

The processor 500 may receive a response signal to scheduling information from external electronic device 1 210. For example, when the response signal received from external electronic device 1 210 includes information related to `accept', the processor 500 may determine that external electronic device 1 210 accepts the scheduling information. For example, when the response signal includes information related to `modification proposal (counter)', the processor 500 may identify scheduling information modified by external electronic device 1 210 in the response signal.

The electronic device (for example, the electronic device 101) or the processor (for example, the processor 120 or 500) may perform data communication with external electronic device 1 210 based on the first scheduling information for the first frequency band in operation 1103. When the first scheduling information is configured as scheduling (initial schedule number) to be initially used, the processor 500 may control the communication circuit 510 to perform data communication with external electronic device 1 210 through a channel of the first frequency band in a further availability window between discovery windows based on the first scheduling information. For example, the processor 500 may control the communication circuit 510 to transmit and/or receive data to and/or from external electronic device 1 210 through the further availability window of the first frequency band between discovery windows.

The electronic device (for example, the electronic device 101) or the processor (or example, the processor 120 or 500) may identify whether external electronic device 2 220 for performing additional data communication with is detected during data communication with external electronic device 1 210 in operation 1105.

When external electronic device 2 220 is not detected (for example, 'No' of operation 1105), the electronic device (for example, the electronic device 101) or the processor (or example, the processor 120 or 500) may end an operation for performing communications with a second external electronic device. The processor 500 may control the communication circuit 510 to maintain the data communication with external electronic device 1 210 based on the first frequency band according to the first scheduling information.

When external electronic device 2 220 is detected (for example, 'Yes' of operation 1105), the electronic device (for example, the electronic device 101) or the processor (or example, the processor 120 or 500) may change the scheduling information for configuring the NDP with external electronic device 210 to second scheduling information in operation 1107. The processor 500 may identify whether external electronic device 2 220 supports the first frequency band. When external electronic device 2 220 does not support the first frequency band, the processor 500 may control the communication circuit 510 to transmit information related to changing from the first scheduling information to the second scheduling information to external electronic device 1 210 through an SDF and/or an NAF within the discovery window. For example, the information related to changing to the second scheduling information may include identification information (for example, an ID or a schedule number of [Table 2]) related to the second scheduling information. For example, the processor 500 may control the communication circuit 510 to update the NAN data path for data communication with external electronic device 1 210 based on the second scheduling information in response to reception of an acknowledgement message (for example, ACK) related to information on the change to the second scheduling information. For example, the processor 500 may control the communication circuit 510 to update the NAN data path for data communication with external electronic device 1 210 based on the second scheduling information in response to transmission of the information on the change to the second scheduling information. The the processor 500 may control the communication circuit 510 to perform data communication with external electronic device 1 210 based on the second scheduling information for the second frequency band according to the update to the second scheduling information. For example, the processor 500 may control the communication circuit 510 to transmit and/or receive data to and/or from external electronic device 1 210 through the further availability window of the second frequency band between discovery windows.

The electronic device (for example, the electronic device 101) or the processor (for example, the processor 120 or 500) may perform scheduling corresponding to the second frequency band to configure the NDP with external electronic device 2 220 in operation 1109. The processor 500 may control the communication circuit 510 to transmit scheduling information of the second frequency band (for example, the band of about 5 GHz) for configuring the NDP with external electronic device 2 220 to external electronic device 2 220. For example, the information related to the scheduling of the second frequency band may be included in at least one piece of NAN availability information or non-NAN operation scheduling information and transmitted to external electronic device 2 220 within the discovery window.

The processor 500 may receive a response signal in response to the scheduling information of the second frequency band from external electronic device 2 220. For example, when the response signal received from external electronic device 2 220 includes information related to `accept', the processor 500 may determine that external electronic device 2 220 accepts the scheduling information of the second frequency band. For example, when the response signal received from external electronic device 2 220 includes information related to `modification proposal (counter)', the processor 500 may identify scheduling information modified by external electronic device 2 220 in the response signal.

The electronic device (for example, the electronic device 101) or the processor (for example, the processor 120 or 500) may perform data communication with external electronic device 2 220 based on the scheduling information for configuring the NDP with external electronic device 2 220 in operation 1111. The processor 500 may control the communication circuit 510 to transmit and/or receive data to and/or from external electronic device 2 220 through a further availability window of the second frequency band between discovery windows. For example, the processor 500 may control the communication circuit 510 to transmit and/or receive data to and/or from external electronic device 1 210 and external electronic device 2 220 through a channel of the second frequency band between discovery windows. For example, data communication with external electronic device 1 210 and external electronic device 2 220 may be performed within the same further availability window or different further availability windows.

The electronic device 101 may perform scheduling for different channels within the same frequency band to configure the NDP with external electronic device 1 210.

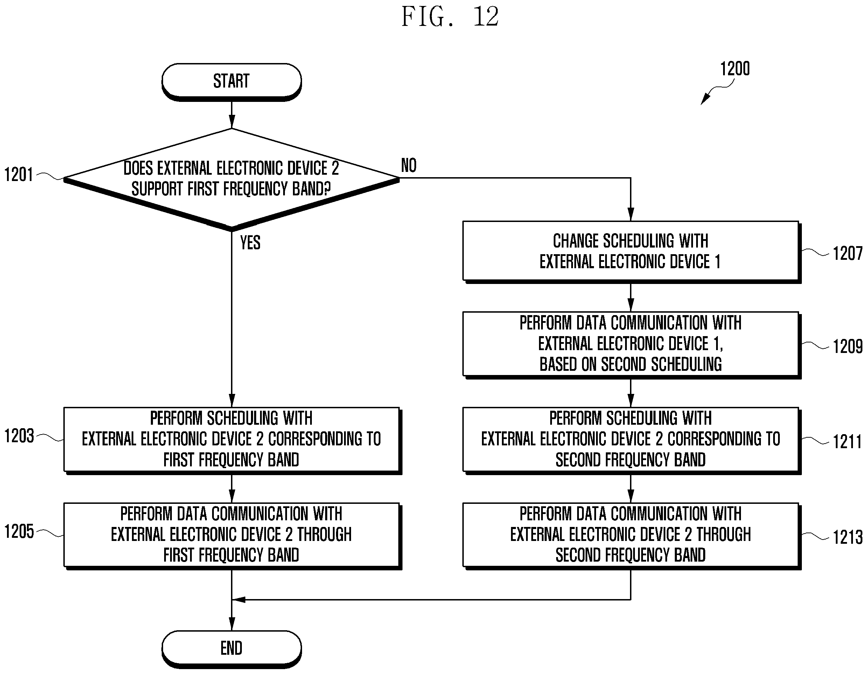

FIG. 12 is a flowchart 1200 illustrating a process in which the electronic device switches scheduling. For example, at least some of FIG. 12 may include the detailed operation of operation 1107 to operation 1111 of FIG. 11. In the following processes, respective operations may be sequentially performed but the sequential performance is not necessary. For example, orders of the operations may be changed, operations omitted, and at least two operations may be performed in parallel or combined. For example, the electronic device of FIG. 12 may be the electronic device 101 of FIG. 1, 2, 3, 4, or 5.

Referring to FIG. 12, when external electronic device 2 220 for additional data communication is detected during data communication with external electronic device 1 210 based on first scheduling information of a first frequency band (for example, `Yes' of operation 1105 of FIG. 11), an electronic device (for example, the electronic device 101 of FIG. 1, 2, 3, 4, or 5) or a processor (for example, the processor 120 of FIG. 1 or the processor 500 of FIG. 5) may identify whether external electronic device 2 220 supports a first frequency band in operation 1201. The processor 500 may identify one piece of NAN availability information, WLAN infrastructure information, or non-NAN operation schedule information based on at least one of a beacon, a service discovery (SDF), or a NAN action frame (NAF) received from external electronic device 2 220 within a synchronized time section (for example, a discovery window). The processor 500 may acquire information related to a frequency band supported by external electronic device 2 220 based on at least one piece of the NAN availability information, the WLAN infrastructure information, or the non-NAN operation schedule information. The processor 500 may identify whether external electronic device 2 220 supports the first frequency band based on information related to the frequency band supported by external electronic device 2 220.

When external electronic device 2 220 supports the first frequency band (for example, 'Yes' of operation 1201), the electronic device (for example, the electronic device 101) or the processor (for example, the processor 120 or 500) may perform scheduling corresponding to the first frequency band to configure the NDP with external electronic device 2 220 in operation 1203. The processor 500 may control the communication circuit 510 to transmit scheduling information of the first frequency band (for example, the band of about 6GHz) for configuring the NDP with external electronic device 2 220 to external electronic device 2 220. For example, the information related to the scheduling of the first frequency band may be included in at least one piece of NAN availability information or non-NAN operation scheduling information and transmitted to external electronic device 2 220 within the discovery window.

The processor 500 may receive a response signal in response to the scheduling information of the first frequency band from external electronic device 2 220. For example, when the response signal received from external electronic device 2 220 includes information related to `accept', the processor 500 may determine that external electronic device 2 220 accepts the scheduling information of the first frequency band. For example, when the response signal received from external electronic device 2 220 includes information related to `modification proposal (counter)', the processor 500 may identify scheduling information modified by external electronic device 2 220 in the response signal.

The electronic device (for example, the electronic device 101) or the processor (for example, the processor 120 or 500) may perform data communication with external electronic device 2 220 based on the scheduling information for configuring the NDP with external electronic device 2 220 in operation 1205. The processor 500 may control the communication circuit 510 to transmit and/or receive data to and/or from external electronic device 2 220 through a further availability window of the first frequency band between discovery windows. For example, the processor 500 may control the communication circuit 510 to transmit and/or receive data to and/or from external electronic device 1 210 and external electronic device 2 220 through a channel of the first frequency band between discovery windows. For example, data communication with external electronic device 1 210 and external electronic device 2 220 may be performed within the same further availability window or different further availability windows.

When external electronic device 2 220 does not support the first frequency band (for example, 'No' of operation 1201), the electronic device (for example, the electronic device 101) or the processor (for example, the processor 120 or 500) may change the scheduling for configuring the NDP with external electronic device 1 210 to second scheduling information in operation 1207. When external electronic device 2 220 does not support the first frequency band, the processor 500 may control the communication circuit 510 to transmit information related to a change from the first scheduling information to the second scheduling information to external electronic device 1 210 through an SDF and/or an NAF within the discovery window. For example, the processor 500 may control the communication circuit 510 to update the NAN data path for data communication with external electronic device 1 210 based on the second scheduling information in response to reception of an acknowledgement message (for example, ACK) related to information on the change to the second scheduling information. For example, the processor 500 may control the communication circuit 510 to update the NAN data path for data communication with external electronic device 1 210 based on the second scheduling information in response to transmission of the information on the change to the second scheduling information.

The electronic device (for example, the electronic device 101) or the processor (for example, the processor 120 or 500) may perform data communication with external electronic device 1 210 based on the second scheduling information for the second frequency band in operation 1209. The processor 500 may control the communication circuit 510 to transmit and/or receive data to and/or from external electronic device 1 210 through a further availability window of the second frequency band between discovery windows.

The electronic device (for example, the electronic device 101) or the processor (for example, the processor 120 or 500) may perform scheduling corresponding to the second frequency band to configure the NDP with external electronic device 2 220 in operation 1211. The processor 500 may control the communication circuit 510 to transmit scheduling information of the second frequency band (for example, the band of about 5 GHz) for configuring the NDP with external electronic device 2 220 to external electronic device 2 220. When when the response signal received from external electronic device 2 220 includes information related to `accept', the processor 500 may determine that external electronic device 2 220 accepts the scheduling information of the second frequency band. When the response signal received from external electronic device 2 220 includes information related to `modification proposal', the processor 500 may identify scheduling information modified by external electronic device 2 220 in the response signal.

The electronic device (for example, the electronic device 101) or the processor (for example, the processor 120 or 500) may perform data communication with external electronic device 2 220 based on the scheduling information for the second frequency band in operation 1213. The processor 500 may control the communication circuit 510 to transmit and/or receive data to and/or from external electronic device 2 220 through a further availability window of the second frequency band between discovery windows. For example, the processor 500 may control the communication circuit 510 to transmit and/or receive data to and/or from external electronic device 1 210 and external electronic device 2 220 through a channel of the second frequency band between discovery windows. For example, data communication with external electronic device 1 210 and external electronic device 2 220 may be performed within the same further availability window or different further availability windows.

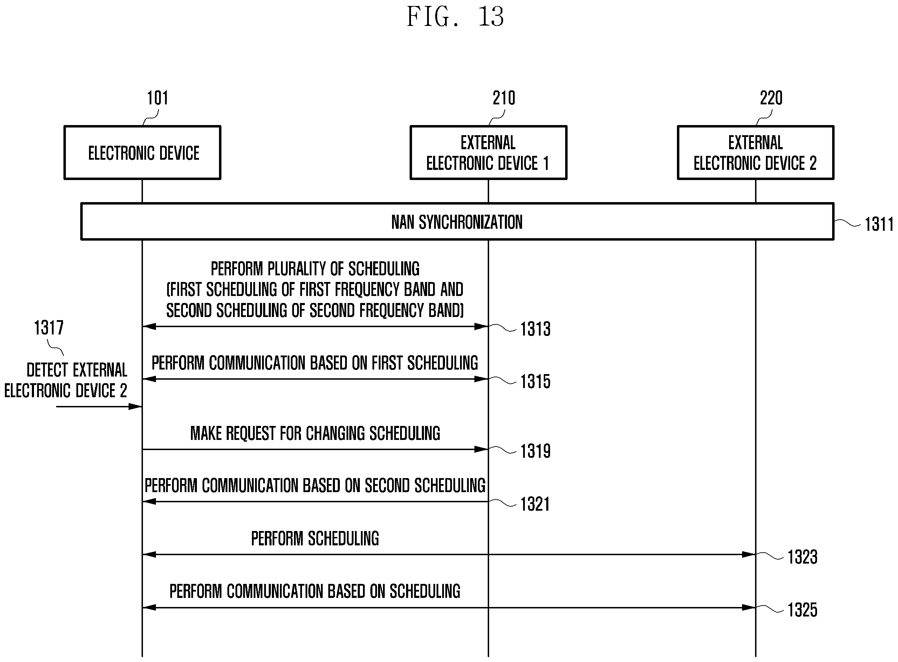

FIG. 13 illustrates an example in which the electronic device performs scheduling based on frequency resources.

Referring to FIG. 13, the electronic device 101, external electronic device 1 210, and external electronic device 2 220 may perform NAN cluster synchronization in operation 1311. The electronic device 101, external electronic device 1 210, and external electronic device 2 220 may perform synchronization with the NAN cluster based on NAN cluster information included in signals broadcasted by electronic devices (for example, the electronic devices 101, 210, 220, and/or 230) included in the cluster (or network) (for example, the cluster 200 of FIG. 2) implemented in the NAN scheme. For example, the NAN cluster synchronization may include a series of operations of synchronizing time resources and frequency resources (for example, channels) by the electronic device 101, external electronic device 1 210, and external electronic device 2 220 included in the NAN cluster. For example, the NAN cluster synchronization may be performed based on time clock information of an electronic device (or a master device of the NAN cluster) (for example, the electronic device 101 of FIG. 2) which represents the electronic devices (for example, the electronic devices 101, 210, 220, and/or 230 of FIG. 2) included in the NAN cluster.

The electronic device 101 and external electronic device 1 210 may perform scheduling corresponding to different frequency bands to configure the NDP for data communication in operation 1313.

The electronic device 101 may transmit at least one piece of first scheduling information for a first frequency band (for example, a band of about 6 GHz) and second scheduling information for a second frequency band (for example, a band of 5 GHz) to external electronic device 1 210. For example, information related to the scheduling may be included in at least one piece of NAN availability information or non-NAN operation scheduling information and transmitted to external electronic device 1 210 within the discovery window. For example, the NAN availability information may include information related to one of channel information to be used for each further available window (FAW), frequency band information, a start time point (start offset), duration (bit duration), or a repetition period. For example, the first scheduling information and the second scheduling information may include scheduling information for different frequency bands in the same time section (for example, FAW) between discovery windows. For example, the first frequency band and the second frequency band may include frequency bands which cannot be simultaneously used by the communication circuit 510.

The electronic device 101 may receive a response signal in response to the scheduling information from external electronic device 1 210. For example, when the response signal received from external electronic device 1 210 includes information related to `accept', the electronic device 101 may determine that external electronic device 1 210 accepts the scheduling information. For example, when the response signal received from external electronic device 1 210 includes information related to `modification proposal (counter)', the electronic device 101 may identify scheduling information modified by external electronic device 1 210 in the response signal.

The electronic device 101 and external electronic device 1 210 may perform data communication based on first scheduling information for a first frequency band in operation 1315. When first scheduling information is configured as scheduling (initial schedule number) to be initially used among the plurality of instances of scheduling (e.g. scheduling for multiple frequency bands), the electronic device 101 and external electronic device 1 210 may transmit and/or receive data through a channel of the first frequency band in a further availability window between discovery windows based on the first scheduling information. For example, the data may be transmitted and/or received through the further availability window of the first frequency band between discovery windows.

The electronic device 101 may detect external electronic device 2 220 for additional data communication during data communication with external electronic device 1 210 based on the first scheduling information of the first frequency band in operation 1317. The electronic device 101 may identify whether external electronic device 2 220 supports the first frequency band. The electronic device 101 may acquire information related to a frequency band supported by external electronic device 2 220 through at least one of a beacon, a service discovery frame (SDF), or a NAN action frame (NAF) received from external electronic device 2 220 within the discovery window. The electronic device 101 may identify whether external electronic device 2 220 supports the first frequency band based on the information related to the frequency band supported by external electronic device 2 220.

When it is determined that external electronic device 2 220 does not support the first frequency, the electronic device 101 may transmit a request signal related to a change of the scheduling for an NDP session with external electronic device 1 210 to external electronic device 1 210 in operation 1319. The request signal related to the change of the scheduling may be transmitted through an SDF and/or an NAF within the discovery window.

The electronic device 101 may perform data communication with external electronic device 1 210 based on second scheduling information for a second frequency band in operation 1321. The electronic device 101 may update a NAN data path for data communication with external electronic device 1 210 based on the second scheduling information in response to reception of an acknowledgement message (for example, ACK) related to information on the change of the scheduling information. The electronic device 101 may update the NAN data path for data communication with external electronic device 1 210 on the second scheduling information in response to transmission of information on the change of the scheduling information. The electronic device 101 may transmit and/or receive data to and/from external electronic device 1 210 through the further availability window of the second frequency band between discovery windows based on the change of the scheduling.

The electronic device 101 may perform scheduling corresponding to the second frequency band to configure the NDP with external electronic device 2 220 in operation 1323. The electronic device 101 may transmit scheduling information of the second frequency band (for example, the band of about 5 GHz) for configuring the NDP with external electronic device 2 220 to external electronic device 2 220. When the response signal received from external electronic device 2 220 includes information related to `accept', the electronic device 101 may determine that external electronic device 2 220 accepts scheduling information of the second frequency band. When the response signal received from external electronic device 2 220 includes information related to `modification proposal', the electronic device 101 may identify scheduling information modified by external electronic device 2 220 in the response signal.

The electronic device 101 may perform data communication with external electronic device 2 220 based on the scheduling information for configuring the NDP with external electronic device 2 220 in operation 1325. The electronic device 101 may transmit and/or receive data to and/or from external electronic device 2 220 through the further availability window of the second frequency band between discovery windows. For example, the electronic device 101 may transmit and/or receive data to and/or from external electronic device 1 210 and external electronic device 2 220 through a channel of the second frequency band between discovery windows. For example, data communication with external electronic device 1 210 and external electronic device 2 220 may be performed within the same further availability window or different further availability windows.

The approach(es) described above with respect to FIGs. 11 to 13 perform scheduling for the first and second time frequency channels when first configuring an NDP with a first external electronic device. Consequently, if the first frequency channel is initially used for the data communication with the first external electronic device, if a second external electronic device that cannot utilize the first frequency band is detected, the communications between the electronic device and the first external electronic device can be switch to the second frequency band without additional or at least reduced scheduling compared to existing approaches since the second scheduling information has previously been determined. Reduced negotiations may also result due to both the first and second scheduling information being configured in a single message exchange. Simultaneous communications with both the first and second external electronic devices can therefore performed with reduced delay. In turn this is means that use of the second frequency band can be implemented with reduced delay compared to existing approaches where scheduling of the second frequency band is performed only when it is determined when the first frequency band cannot be used. This reduced delay can increase data transfer speed and the reduced number of messages exchanged may reduce power consumption.

According to an example, a method of operating an electronic device (for example, the electronic device 101 of FIG. 1, 2, 3, 4, or 5) may include an operation of performing scheduling for different time sections based on a request for configuring a NAN data path (NDP) scheduling with an external electronic device included in a cluster of neighbor awareness networking (NAN). Accordingly, first scheduling information corresponding to a first time section(s) (i.e. specifying scheduling of resources within the first time section(s)) is generated. If second time section(s) are present, second scheduling information is generated, and similar applies for third time section(s) and so forth if present. Therefore, a plurality of different instances of scheduling information may be generated. The method of operating the electronic device may include an operation of transmitting or receiving data to or from the external electronic device based on a first scheduling corresponding to a first time section. The method of operating the electronic device may include an operation of identifying channels of the electronic device and the external electronic device allocated to a second time section different from the first time section. The method of operating the electronic device may include an operation of, in case that the electronic device and the external electronic device use an equal channel in the second time section, transmitting or receiving data to or from the external electronic device based on the first scheduling information corresponding to the first time section and a second scheduling information corresponding to the second time section.

The operation of transmitting or receiving the data with the external electronic device based on the first scheduling information may include an operation of transmitting or receiving data to or from the external electronic device through the first time section between discovery windows based on the first scheduling information.

The operation of transmitting or receiving the data to or from the external electronic device based on the first scheduling information and the second scheduling information may include an operation of, transmitting information related to the second scheduling information to the external electronic device in case that the electronic device and the external electronic device use the equal channel in the second time section, and an operation of transmitting or receiving data to or from the external electronic device through the first time section and the second time section between discovery windows based on the first scheduling information and the second scheduling information.

The information related to the second scheduling information may be transmitted to the external electronic device in at least one of the discovery window and/or the first time section.

The operation of identifying the channel of the external electronic device may include an operation of identifying a channel of the external electronic device based on at least one piece of NAN availability information (NAN availability attribute), WLAN infrastructure information (extended WLAN infrastructure attribute), or non-NAN operation schedule information (unaligned scheduled attribute) received from the external electronic device within the discovery window.

The operation of performing the scheduling may include an operation of transmitting information related to the first time section and the second time section included in discovery windows to the external electronic device and an operation of performing the scheduling for different time sections based on a response to the information related to the first time section and the second time section received from the external electronic device.

The information related to the time sections may include at least one of channel information used in the respective time sections, a frequency band, a start time point (start offset), duration (bit duration), or a repetition period.

When channels used by the electronic device and the external electronic device in the second time are different from each other, the method may include an operation of limiting a use of the second scheduling information.

The method may include an operation of limiting the use of the second scheduling information based on a change of channels used by the electronic device and/or the external electronic device in the second time section.

Embodiments, examples and implementations of the disclosure in the specifications and drawings are presented to easily describe the technical content according to embodiments of the disclosure and provide specific examples for helping understanding of embodiments of the disclosure, but do not intent to limit the scope of the embodiments of the disclosure. Therefore, the range of various embodiments of the disclosure should be construed such that all changes or changed forms derived based on the technical idea of various embodiments of the disclosure as well as the embodiments disclosed herein are included in the range of various embodiments of the disclosure.

The embodiments, examples, implementations and features thereof described in this disclosure may also be combined unless specified otherwise or mutually exclusive.

## Claims

1. An electronic device comprising:
a communication circuit; and
a processor operatively connected to the communication circuit,
wherein the processor is configured to:
perform scheduling for a first time section and a second time section of a communications resource based on a request for configuring a neighbor awareness networking (NAN) data path (NDP) scheduling with an external electronic device included in a cluster of NAN including the electronic device;
transmit or receive data to or from the external electronic device based on first scheduling information corresponding to the first time section generated through the scheduling;
identify frequency channels of the electronic device and the external electronic device allocated to the second time section; and
in a case that the allocated frequency channels are the same for the electronic device and the external electronic device, transmit or receive data to or from the external electronic device, based on the first scheduling information correpsonding to the first time section and second scheduling information corresponding to the second time section generated through the scheduling.

2. The electronic device of claim 1, wherein the processor is configured to transmit or receive data to or from the external electronic device through the first time section between discovery windows, based on the first scheduling information.

3. The electronic device of claims 1 or 2, wherein the processor is configured to:
in a case that the allocated frequency channels are the same for the electronic device and the external electronic device, transmit information related to the second scheduling information to the external electronic device; and
transmit or receive data to or from the external electronic device through the first time section and the second time section between discovery windows, based on the first scheduling information and the second scheduling information.

4. The electronic device of claim 3, wherein the processor is configured to transmit the information related to the second scheduling information to the external electronic device in at least one of the discovery windows or the first time section.

5. The electronic device of any preceding claim, wherein the processor is configured to identify the frequency channel of the external electronic device allocated to the second time section based on at least one piece of NAN availability information (NAN availability attribute), WLAN infrastructure information (extended WLAN infrastructure attribute), or non-NAN operation schedule information (unaligned scheduled attribute) received from the external electronic device within the discovery window.

6. The electronic device of any preceding claim, wherein the processor is configured to:
transmit information related to the first time section and the second time section included in discovery windows to the external electronic device; and
perform the scheduling for the first and second time sections based on a response to the information related to the first time section and the second time section received from the external electronic device.

7. The electronic device of any preceding claim, wherein the processor is configured to, in a case that the allocated frequency channels for the electronic device and the external electronic device are different from each other, limit a use of the second scheduling information.

8. The electronic device of any preceding claim, wherein the processor is configured to limit a use of the second scheduling information, based on a change of the allocated frequency channels for use by the electronic device and/or the external electronic device in the second time section.

9. A method of operating an electronic device, the method comprising:
performing scheduling for a first time section and a second time section of a communications resource based on a request for configuring a neighbor awareness networking (NAN) data path (NDP) scheduling with an external electronic device included in a cluster of NAN including the electronic device;
transmitting or receiving data to or from the external electronic device based on first scheduling information corresponding to the first time section generated through the scheduling;
identifying frequency channels of the electronic device and the external electronic device allocated to the second time section; and
in a case that the allocated frequency channels are the same for the electronic device and the external electronic device, transmitting or receiving data to or from the external electronic device, based on the first scheduling information corresponding to the first time section and second scheduling information corresponding to the second time section generated through the scheduling.

10. The method of claim 9, wherein the transmitting or receiving of the data to or from the external electronic device, based on the first scheduling infromatoin comprises transmitting or receiving data to or from the external electronic device through the first time section between discovery windows, based on the first scheduling information.

11. The method of claims 9 or 10, wherein the transmitting or receiving of the data to or from the external electronic device, based on the first scheduling information and the second scheduling information comprises:
transmitting information related to the second scheduling information to the external electronic device in a case that the allocated frequency channels are the same for the electronic device and the external electronic device; and
transmitting or receiving data to or from the external electronic device through the first time section and the second time section between discovery windows, based on the first scheduling information and the second scheduling information.

12. The method of any of claims 9 to 11, wherein the identifying of the frequency channel of the external electronic device allocated to the second time section comprises identifying a frequency channel of the external electronic device allocated to the second time section based on at least one piece of NAN availability information (NAN availability attribute), WLAN infrastructure information (extended WLAN infrastructure attribute), or non-NAN operation schedule information (unaligned scheduled attribute) received from the external electronic device within the discovery window.

13. The method of any of claims 9 to 12, wherein the performing of the scheduling comprises:
transmitting information related to the first time section and the second time section included in discovery windows to the external electronic device; and
performing the scheduling for the first and second time sections based on a response to the information related to the first time section and the second time section received from the external electronic device.

14. The method of any of claims 9 to 13, further comprising, in case that the allocated frequency channels for the electronic device and the external electronic device are different from each other, limiting a use of the second scheduling.

15. The method of any of claims 9 to 14, further comprising limiting a use of the second scheduling information based on a change of the allocated frequency channels used by the electronic device and/or the external electronic device in the second time section.
